# FASCICULE DE BREVET EUROPEEN

(11) **EP 3 320 256 B1**
(45) Date de publication et mention de la délivrance du brevet: **05.02.2020**
(21) Numéro de dépôt: 16744807.5
(22) Date de dépôt: 05.07.2016
(51) Int. Cl.: F17C 3/02

(54) **CUVE ETANCHE ET THERMIQUEMENT ISOLANTE AYANT UNE MEMBRANE D'ETANCHEITE SECONDAIRE EQUIPEE D'UN ARRANGEMENT D'ANGLE A TOLES METALLIQUES ONDULEES**
ABGEDICHTETER UND WÄRMEISOLIERTER TANK MIT SEKUNDÄRDICHTUNGSMEMBRAN MIT EINER ECKANORDNUNG MIT WELLBLECHEN
SEALED AND THERMALLY INSULATED TANK HAVING A SECONDARY SEALING MEMBRANE EQUIPPED WITH A CORNER ARRANGEMENT WITH CORRUGATED METAL SHEETS

(30) Priorité: 06.07.2015 FR 1556356
(43) Date de publication de la demande: 16.05.2018
(73) Titulaire: GAZTRANSPORT ET TECHNIGAZ, 78470 Saint-Rémy-lès-Chevreuse (FR)
(72) Inventeur: BOYEAU, Marc, 78450 Villepreux (FR); PHILIPPE, Antoine, 91190 Gif Sur Yvette (FR); DELANOE, Sébastien, 78470 Saint Remy Les Chevreuse (FR)
(74) Mandataire: Loyer & Abello
(86) Numéro de dépôt international: PCT/FR2016/051699
(87) Numéro de publication internationale: WO 2017/006044

(56) Documents cités:
- WO-A2-2014/167213
- WO-A2-2014/167214

## Description

### Domaine technique

L'invention se rapporte au domaine des cuves, étanches et thermiquement isolantes, à membranes, pour le stockage et/ou le transport de fluide, tel qu'un fluide cryogénique.

Des cuves étanches et thermiquement isolantes à membranes sont notamment employées pour le stockage de gaz naturel liquéfié (GNL), qui est stocké, à pression atmosphérique, à environ -162°C. Ces cuves peuvent être installées à terre ou sur un ouvrage flottant. Dans le cas d'un ouvrage flottant, la cuve peut être destinée au transport de gaz naturel liquéfié ou à recevoir du gaz naturel liquéfié servant de carburant pour la propulsion de l'ouvrage flottant.

### Arrière-plan technologique

Il est décrit dans le document WO2014167213 une cuve étanche et thermiquement isolante pour le stockage de gaz naturel liquéfié, intégrée dans une structure porteuse, telle que la double coque d'un navire destiné au transport de gaz naturel liquéfié. La cuve comporte une structure multicouche présentant successivement, dans le sens de l'épaisseur, depuis l'extérieur vers l'intérieur de la cuve, une barrière thermiquement isolante secondaire retenue à la structure porteuse, une membrane d'étanchéité secondaire reposant contre la barrière thermiquement isolante secondaire, une barrière thermiquement isolante primaire reposant contre la membrane d'étanchéité secondaire et une membrane d'étanchéité primaire destinée à être en contact avec le gaz naturel liquéfié contenu dans la cuve.

La membrane d'étanchéité secondaire est constituée d'une pluralité de tôles métalliques comportant deux ondulations perpendiculaires faisant saillie vers l'extérieur de la cuve et permettant ainsi à la membrane d'étanchéité secondaire de se déformer sous l'effet des sollicitations thermiques générées par le fluide emmagasiné dans la cuve. La barrière thermiquement isolante secondaire comporte une pluralité de panneaux isolants de dimensions standards juxtaposés contre la structure porteuse et séparés par des interstices. Chaque tôle métallique de la membrane d'étanchéité secondaire présente sensiblement une longueur et une largeur correspondant à celles des panneaux isolants standards de la barrière thermiquement isolante secondaire et est disposée de manière décalée par rapport auxdits panneaux isolants de telle sorte qu'elle s'étend à cheval sur quatre panneaux isolants et que les ondulations des tôles métalliques ondulées soient insérées à l'intérieur des interstices séparant lesdits panneaux isolants.

Au niveau d'un angle entre deux parois, la barrière thermiquement isolante secondaire comporte une structure d'angle composée de deux panneaux isolants d'angle qui sont respectivement disposés contre la structure porteuse de l'une et l'autre des deux parois et forment ensemble un coin de la barrière thermiquement isolante secondaire. Chacun de ces deux panneaux isolants d'angle comporte sur sa face interne une bande de liaison métallique. Une cornière métallique est soudée à la bande de liaison métallique de l'un et l'autre des deux panneaux isolants d'angle de manière à assurer l'étanchéité de la membrane d'étanchéité secondaire. En bordure de chaque paroi, des tôles métalliques ondulées assurent la jonction de la membrane d'étanchéité secondaire avec la structure d'angle en étant soudées sur les bandes de liaison métalliques. Les dimensions des tôles métalliques en bordure de paroi peuvent être différentes de celle des autres tôles métalliques de sorte à s'adapter aux dimensions de la structure d'angle.

L'agencement de la barrière d'isolation thermique secondaire et de la membrane d'étanchéité secondaire précité n'est toutefois pas pleinement satisfaisant.

En effet, d'une part, un tel agencement ne permet pas de compenser les tolérances dimensionnelles de construction de la barrière thermiquement isolante secondaire de chaque paroi, dues notamment aux marges de tolérance dans la fabrication la structure porteuse. Or, les tolérances de construction de la structure porteuse sont susceptibles d'atteindre plusieurs centimètres, par exemple de l'ordre de 4 cm.

De plus, un tel agencement impose des contraintes quant aux dimensions des cuves susceptibles d'être fabriquées. En effet, la dimension entre deux structures d'angle disposées au niveau de deux coins opposés d'une paroi de cuve doit nécessairement correspondre sensiblement à un multiple entier soit de la largeur soit de la longueur d'un panneau isolant standard de la barrière thermiquement isolante secondaire.

### Résumé

Une idée à la base de l'invention est de proposer une cuve étanche et thermiquement isolante à structure multicouche qui permette de résoudre au moins l'un des inconvénients susmentionnés de l'état de la technique.

Selon un mode de réalisation, l'invention fournit une cuve étanche et thermiquement isolante destinée au stockage d'un fluide, ladite cuve présentant une pluralité de parois présentant une structure multicouche comportant successivement, dans le sens de l'épaisseur depuis l'extérieur vers l'intérieur de la cuve, une barrière thermiquement isolante secondaire retenue contre une structure porteuse, une membrane d'étanchéité secondaire portée par la barrière thermiquement isolante secondaire, une barrière thermiquement isolante primaire reposant contre la membrane d'étanchéité secondaire et une membrane d'étanchéité primaire portée par la barrière thermiquement isolante primaire et destinée à être en contact avec le fluide contenu dans la cuve ;
une première des parois présentant une barrière thermiquement isolante secondaire comprenant :
- un premier panneau isolant disposé le long de l'intersection entre la structure porteuse de ladite première paroi et la structure porteuse d'une seconde paroi adjacente ; et
- un deuxième panneau isolant juxtaposé au premier panneau isolant le long d'un bord dudit premier panneau isolant opposé à la deuxième paroi ;
le premier et le deuxième panneaux isolants présentant chacun une face interne opposée à la structure porteuse équipée d'une platine métallique ;
la première paroi présentant une membrane d'étanchéité secondaire comportant :
- une première tôle métallique présentant au moins deux ondulations perpendiculaires et présentant un premier et un second bords opposés qui sont respectivement tournés en face de la seconde paroi et à l'opposé de la seconde paroi ; le premier bord de la première tôle métallique étant, d'une part, soudé sur la platine métallique du premier panneau isolant pour retenir la première tôle métallique contre la premier panneau isolant et d'autre part, soudé à une première aile d'une cornière métallique qui présente une seconde aile soudée à la tôle métallique de la membrane d'étanchéité secondaire de la deuxième paroi ; et
- une seconde tôle métallique présentant au moins deux ondulations perpendiculaires, l'une desdites ondulations étant disposée dans le prolongement de l'une des ondulations de la première tôle métallique, la seconde tôle métallique présentant un premier et un second bords opposés qui sont respectivement dirigés vers la seconde paroi et dans la direction opposée à la seconde paroi ; le second bord de la seconde tôle métallique étant soudé sur la platine métallique du second panneau isolant ;
le second bord de la première tôle métallique et le premier bord de la seconde tôle métallique étant soudés l'un à l'autre, l'un parmi le second bord de la première tôle métallique et le première bord de la seconde tôle métallique étant un bord joggliné permettant un soudage par recouvrement de la première et de la seconde tôles métalliques.

Ainsi, en réalisant l'étanchéité de la membrane d'étanchéité secondaire entre le premier panneau isolant et le second panneau isolant au moyen de deux tôles, à savoir la première et la seconde tôles métalliques, il est possible de compenser au moins une partie des tolérances dimensionnelles de la structure porteuse en adaptant la largeur du recouvrement entre la première et la seconde tôles métalliques ou la largeur de la seconde tôle métallique.

De même, cette possibilité d'adaptation de la largeur de recouvrement entre la première et la seconde tôles métalliques ou de la largeur de la seconde tôle est également susceptible d'autoriser une plus grande flexibilité quant aux choix des dimensions de la cuve.

En outre, les dimensions du second panneau isolant sont également susceptibles d'être ajustées afin de compenser les tolérances dimensionnelles de fabrication de la barrière thermiquement isolante secondaire et/ou afin de s'adapter aux dimensions souhaitées de la cuve.

De plus, l'association de la première et de la seconde tôles métalliques permet ainsi de créer au niveau d'un angle de la cuve un décalage entre les tôles métalliques de la membrane d'étanchéité et les panneaux isolants de la barrière thermiquement isolante secondaire de telle sorte que les tôles métalliques de la membrane d'étanchéité secondaire dans la zone plane adjacente soient susceptibles de s'étendre à cheval sur plusieurs panneaux isolants.

Enfin, la membrane d'étanchéité secondaire présente, via la première tôle métallique, des ondulations jusqu'à proximité de l'intersection entre les deux parois adjacentes de la cuve ce qui permet de lui conférer une excellente flexibilité au niveau de la structure d'angle.

Selon des modes de réalisation, une telle étanche et thermiquement isolante de stockage d'un fluide peut comporter une ou plusieurs des caractéristiques suivantes :
- le bord joggliné présente une largeur supérieure à 4 centimètres.
- la membrane d'étanchéité secondaire de la première paroi comporte en outre, dans une zone plane, s'étendant à partir du second bord de la seconde tôle métallique vers une troisième paroi opposée à la seconde paroi, une pluralité de tôles métalliques standards qui présentent chacune au moins deux ondulations perpendiculaires dont l'une est parallèle à l'intersection, les ondulations parallèles à l'intersection de la pluralité de tôles métalliques standards étant séparées les unes des autres par une distance inter-ondulation standard et dans lequel une ondulation de la première tôle métallique qui est parallèle à l'intersection est séparée d'une ondulation de la seconde tôle métallique qui est parallèle à l'intersection par une distance inter-ondulation différente de la distance inter-ondulation standard. En d'autres termes, la distance inter-ondulations entre une onde de la première tôle métallique qui est parallèle à l'intersection et une onde de la seconde tôle métallique qui est parallèle à l'intersection et adjacente présente une dimension différente de la distance inter-ondulations standard entres deux ondes parallèles à ladite intersection dans une zone plane standard de la paroi.
- le second bord de la première tôle métallique et le premier bord de la seconde tôle métallique sont soudés l'un à l'autre au droit d'un interstice séparant le premier et le deuxième panneaux isolants.
- le premier panneau isolant est associé au second panneau isolant par l'intermédiaire d'une pluralité d'éléments de pontage, chaque élément de pontage étant, d'une part, fixé à un bord de la face interne du premier panneau isolant et, d'autre part, fixé à un bord en vis-à-vis de la face interne du deuxième panneau isolant de manière à s'opposer à un écartement mutuel du premier et du deuxième panneaux isolants.
- les éléments de pontage sont des plaques de pontage qui présentent chacune une face externe reposant contre la face interne du premier et du deuxième panneaux isolants et une face externe, au moins l'une des plaques de pontage présentant une face interne équipée d'une platine métallique, le second bord de la première tôle métallique et le premier bord de la seconde tôle métallique étant soudés sur ladite platine métallique.
- la première tôle métallique comporte une pluralité d'ondulations s'étendant selon une direction sécante à la deuxième paroi et une seule ondulation s'étendant selon un axe parallèle à l'intersection entre la première et la seconde parois.
- la seconde tôle métallique comporte une pluralité d'ondulations s'étendant selon une direction sécante à la deuxième paroi et une seule ou deux ondulations s'étendant chacune selon un axe parallèle à l'intersection entre la première et la seconde parois.
- la cornière métallique comporte une ondulation s'étendant d'un bout à l'autre de ladite cornière métallique, le long de la première et de la seconde ailes, de sorte à permettre une déformation de la cornière métallique selon une direction parallèle à l'intersection entre la première et la seconde parois, ladite ondulation s'étendant dans le prolongement de l'une des ondulations de la première tôle métallique qui s'étend selon une direction sécante à la deuxième paroi.
- la cuve comprend une pluralité de cornières métalliques comportant chacune une seule ondulation, chacune des cornières métalliques étant soudée sur la première tôle métallique dans le prolongement d'une ondulation de la première tôle métallique.
- la ou chaque cornière métallique est en outre soudée sur la platine métallique du premier panneau isolant.
- les ondulations de la première et de la seconde tôles métalliques font saillie vers l'extérieur de la cuve en direction de la structure porteuse, la face interne du premier et du second panneaux isolants présentant des rainures perpendiculaires recevant respectivement les ondulations de la première et de la seconde tôles métalliques.
- le premier panneau isolant comporte, dans chaque intervalle entre deux rainures sécantes à la seconde paroi, une platine métallique sur laquelle sont soudés le premier bord de la première tôle métallique et la première aile de la ou de l'une des cornières métalliques.
- le deuxième panneau isolant comporte, dans chaque intervalle entre deux rainures sécantes à la deuxième paroi, une platine métallique sur laquelle est soudé le second bord de la seconde tôle métallique.
- les ondulations de la première et de la seconde tôles métalliques font saillie vers l'intérieur de la cuve, la barrière thermiquement isolante primaire comportant des panneaux isolants présentant chacun une face externe présentant des rainures perpendiculaires recevant les ondulations de la première et de la seconde tôles métalliques de la membrane d'étanchéité secondaire.
- la barrière thermiquement isolante secondaire de première paroi comporte en outre, dans une zone plane s'étendant à partir d'un bord du second panneau opposé à la seconde paroi vers une troisième paroi opposée à la seconde paroi, une pluralité de panneaux isolants standards juxtaposés présentant chacun une forme de parallélépipède rectangle et une face interne opposée à la paroi porteuse qui est équipée d'une platine métallique et la membrane d'étanchéité secondaire de la première paroi comporte en outre, dans une zone plane s'étendant à partir du second bord de la seconde tôle métallique vers la troisième paroi, une pluralité de tôles métalliques standards qui présentent chacune au moins deux ondulations perpendiculaires et qui sont soudées les unes aux autres et sont chacune disposées à cheval sur plusieurs desdits panneaux isolants standards et soudées sur les platines métalliques desdits panneaux isolants standards, l'une desdites tôles métalliques standards bordant la seconde tôle métallique présentant un bord dirigé vers la seconde paroi qui est, d'une part, soudé sur la platine métallique du second panneau isolant et, d'autre part, soudé sur le second bord de la seconde tôle métallique.
- les panneaux isolants standards présentent des dimensions identiques et le second panneau isolant présente une dimension dans une direction s'étendant d'un bord dirigé en vis-à-vis de la deuxième paroi vers un bord opposé à la seconde paroi différente de la dimension correspondante des panneaux isolants standards.
- la barrière thermiquement isolante primaire de la première paroi comporte un premier bloc isolant qui est fixé sur le premier panneau isolant de la barrière thermiquement isolante secondaire au moyen d'un organe de fixation et la première tôle métallique présente un orifice de passage de l'organe de fixation et est soudée en périphérie dudit orifice à l'organe de fixation.
- Selon un mode de réalisation, le premier bloc isolant est fixé sur le premier panneau isolant au moyen d'un goujon fileté passant au travers d'un orifice ménagé dans ledit premier bloc isolant, ledit goujon fileté coopérant avec un alésage fileté ménagé dans un écrou borgne, ledit écrou borgne traversant l'orifice ménagé dans la première tôle métallique et présentent un filetage coopérant avec un alésage fileté ménagé dans une platine d'ancrage fixée sur le premier panneau isolant, l'écrou borgne comportant en outre une collerette qui plaque la première tôle métallique contre le premier panneau isolant et qui est soudée sur la première plaque métallique en périphérie dudit orifice.
- le premier panneau isolant compose avec un premier panneau isolant de la seconde paroi une structure d'angle pré-assemblée formant un coin de la cuve à l'intersection entre la première et la seconde parois.

Une telle cuve peut faire partie d'une installation de stockage terrestre, par exemple pour stocker du GNL ou être installée dans une structure flottante, côtière ou en eau profonde, notamment un navire méthanier, une unité flottante de stockage et de regazéification (FSRU), une unité flottante de production et de stockage déporté (FPSO) et autres.

Selon un mode de réalisation, un navire pour le transport d'un produit liquide froid comporte une double coque et une cuve précitée disposée dans la double coque.

Selon un mode de réalisation, l'invention fournit aussi un procédé de chargement ou déchargement d'un tel navire, dans lequel on achemine un fluide à travers des canalisations isolées depuis ou vers une installation de stockage flottante ou terrestre vers ou depuis la cuve du navire.

Selon un mode de réalisation, l'invention fournit aussi un système de transfert pour un fluide, le système comportant le navire précité, des canalisations isolées agencées de manière à relier la cuve installée dans la coque du navire à une installation de stockage flottante ou terrestre et une pompe pour entrainer un fluide à travers les canalisations isolées depuis ou vers l'installation de stockage flottante ou terrestre vers ou depuis la cuve du navire.

Une idée à la base de l'invention est de fournir une structure multicouche étanche et isolante qui soit facile à réaliser sur des surfaces étendues.

### Brève description des figures

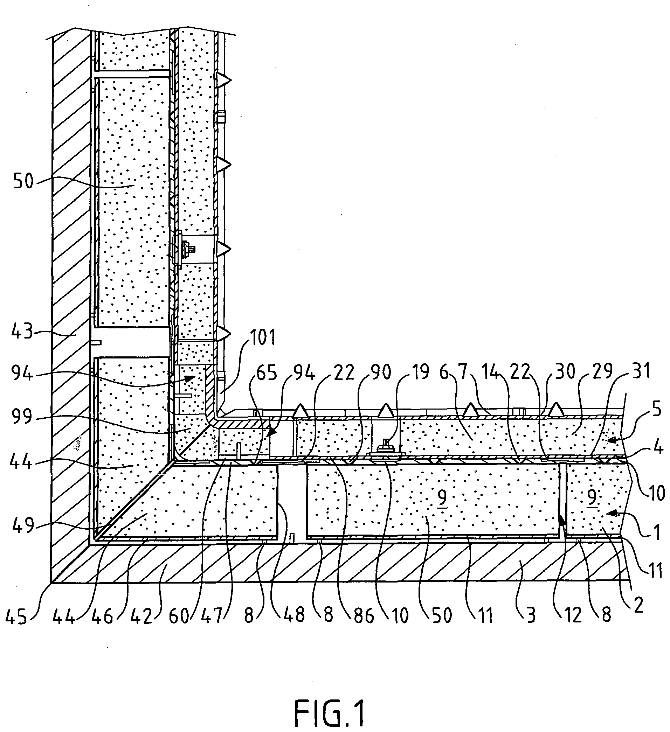

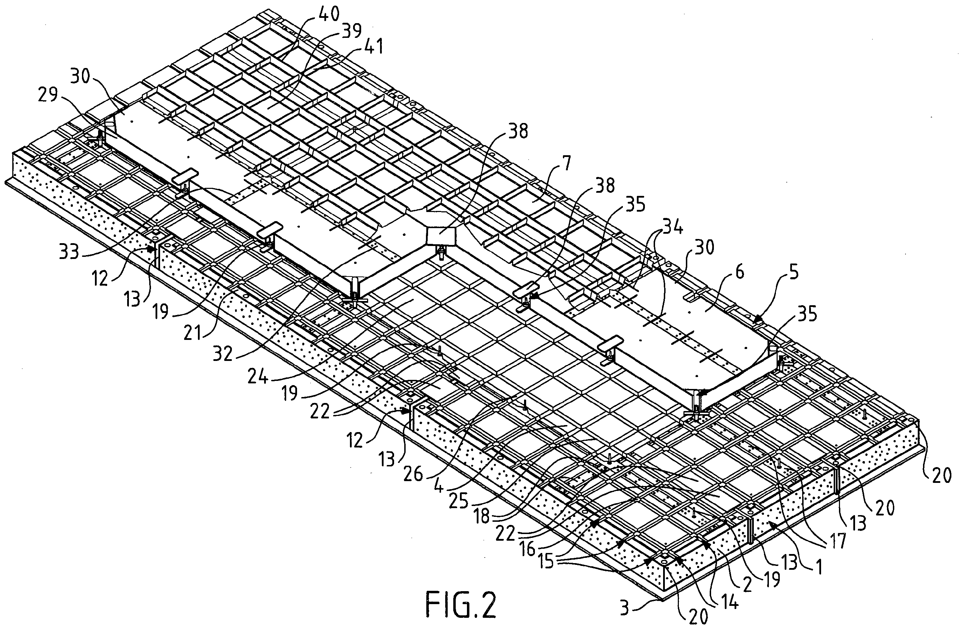

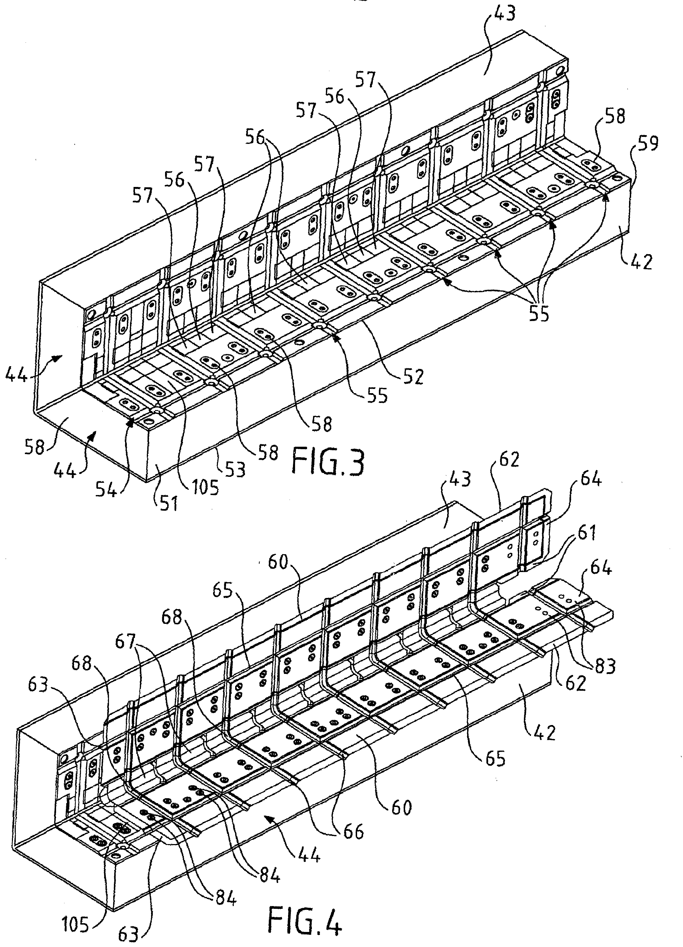

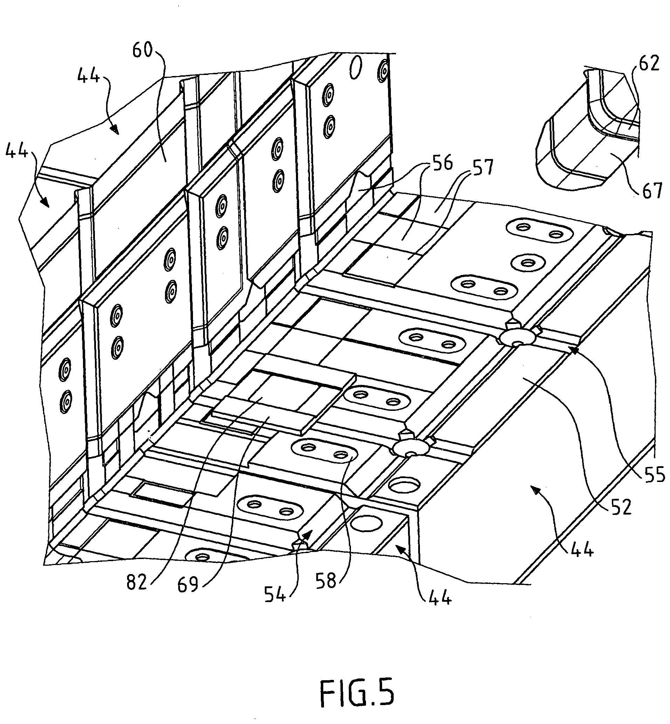

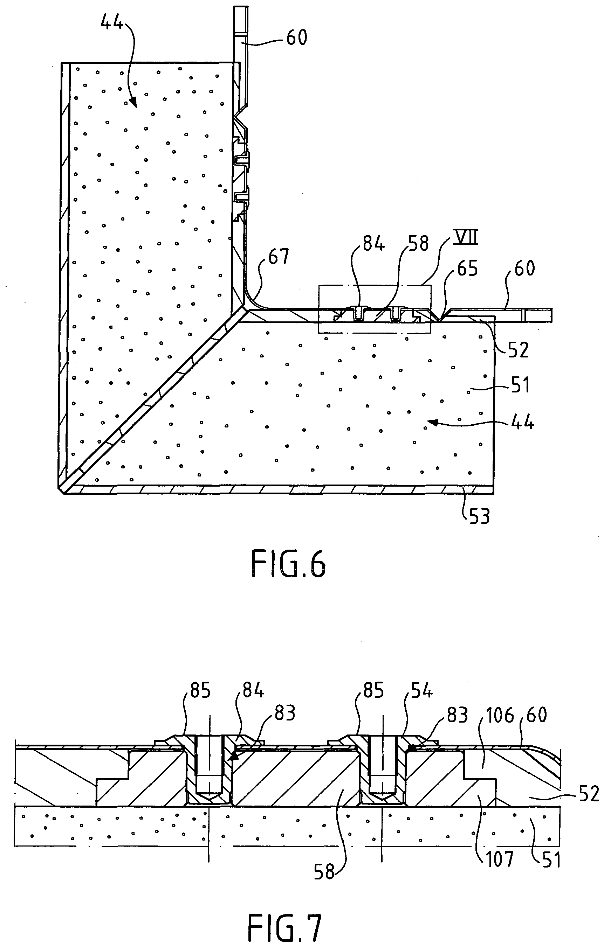

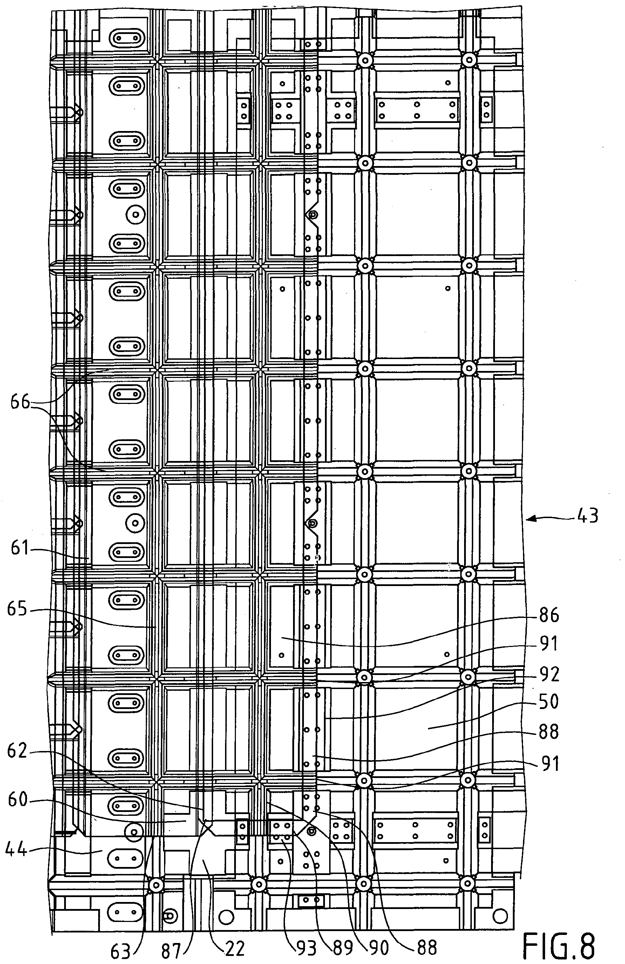

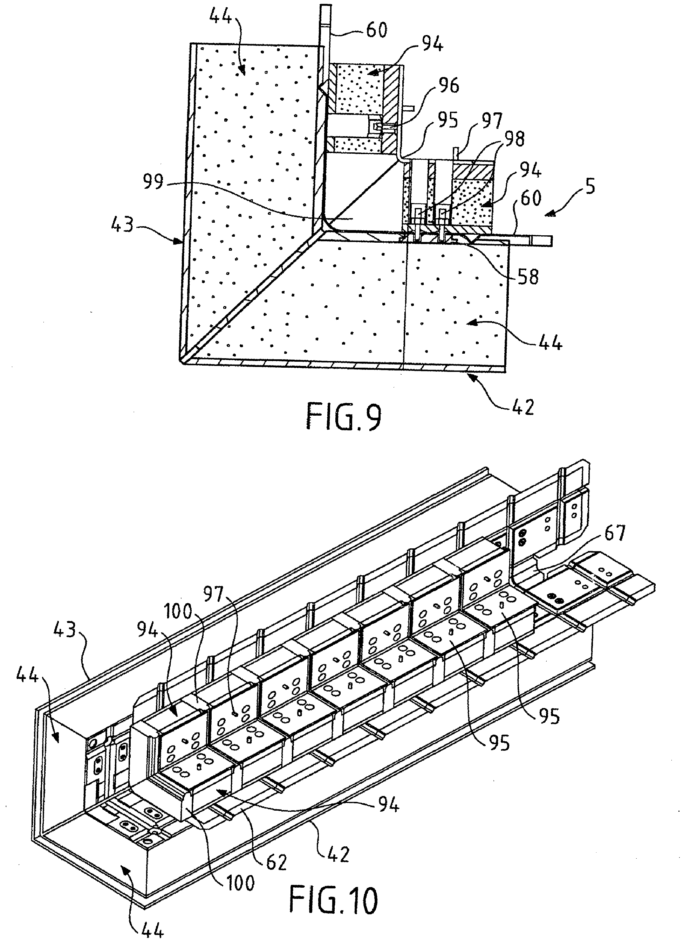

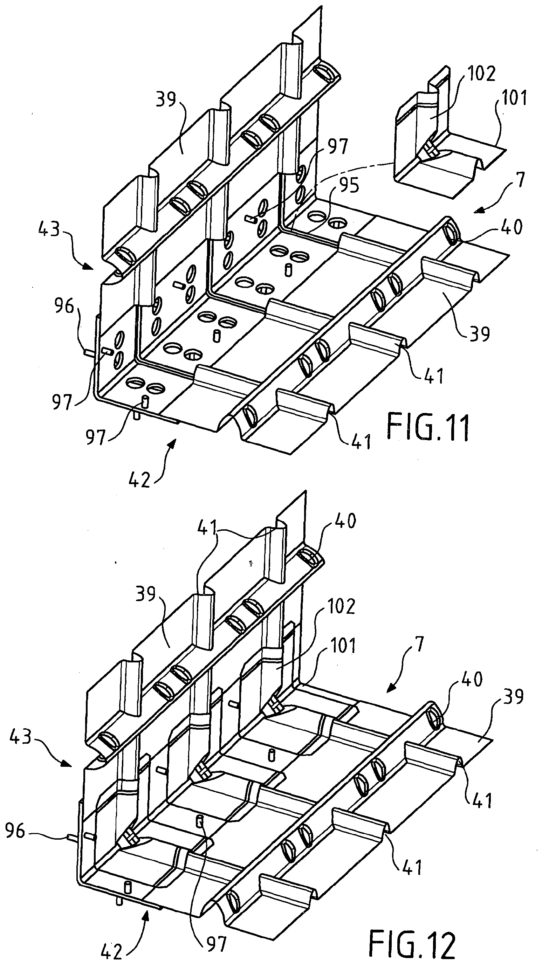

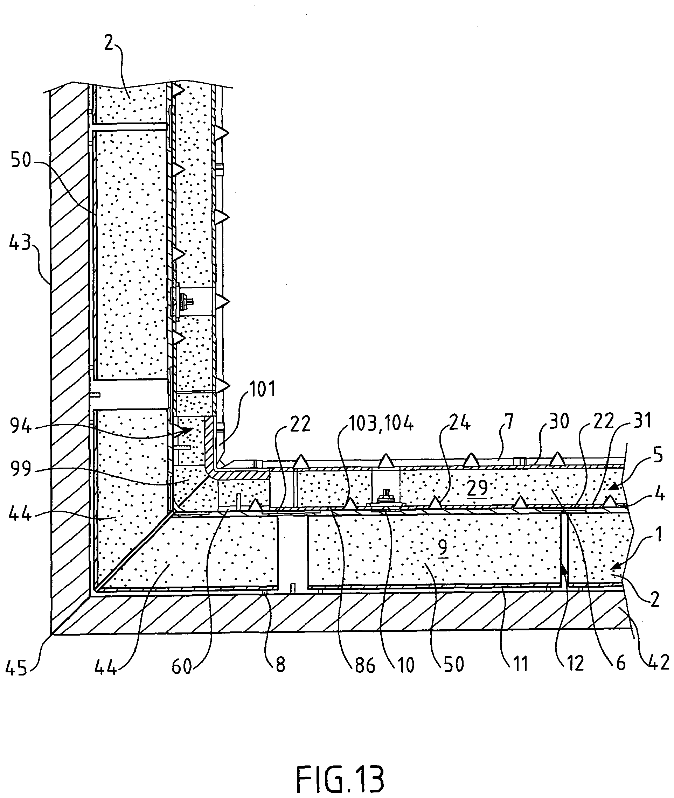

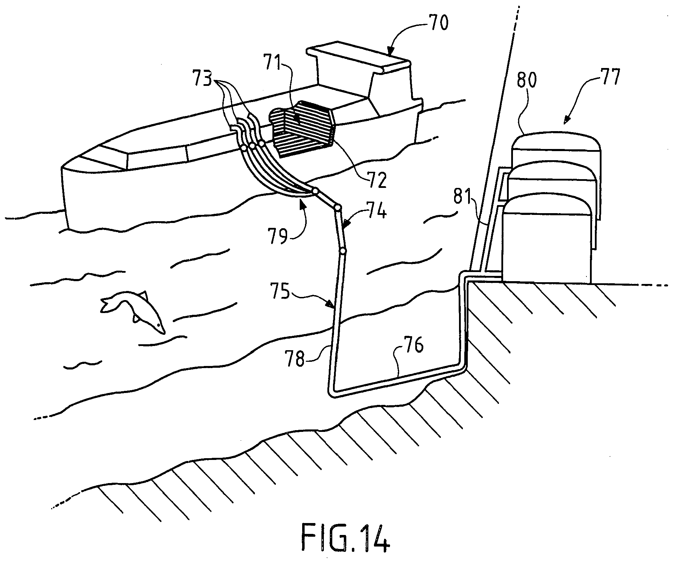

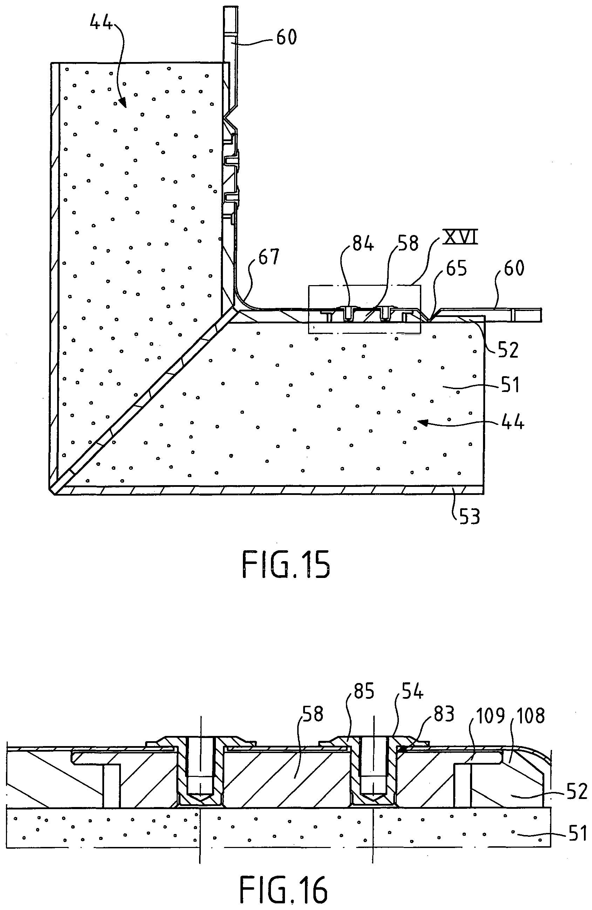

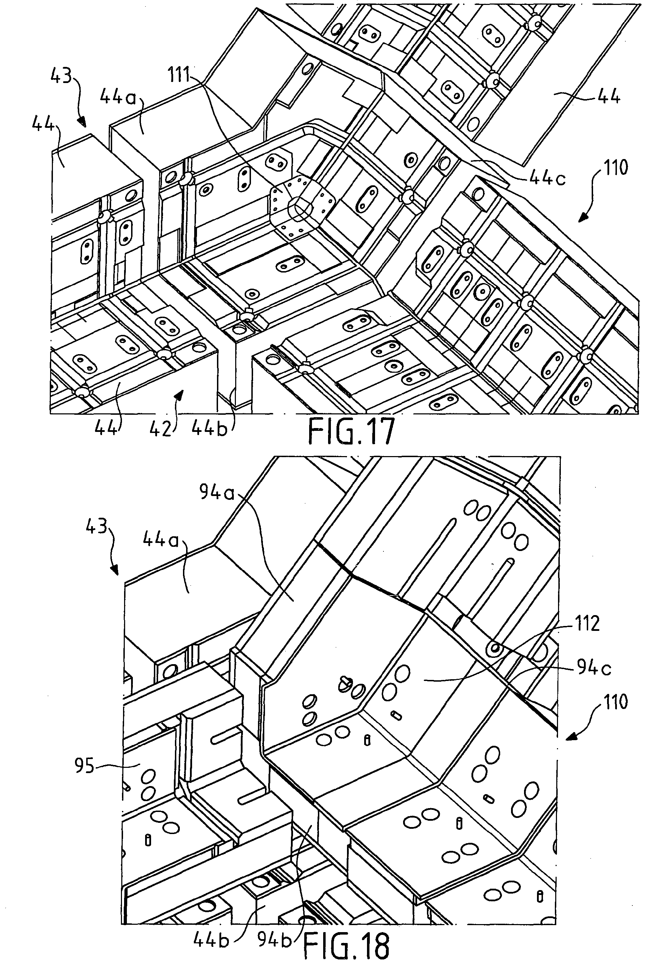

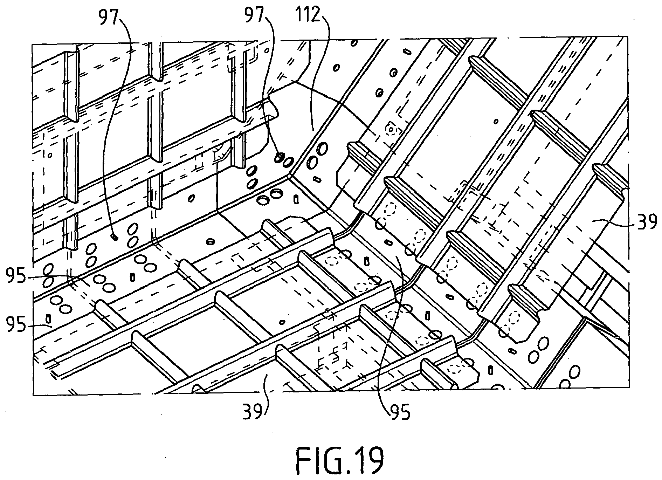

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une vue en coupe d'une cuve étanche et thermiquement isolante de stockage d'un fluide au niveau d'une zone d'angle entre deux parois.
- **La** **figure 2** est une vue écorchée en perspective, d'une zone plane d'une paroi de cuve.
- **La** **figure 3** est une vue en perspective représentant la barrière thermiquement isolante secondaire au niveau d'une zone d'angle de la cuve.
- **La** **figure 4** est une vue en perspective illustrant la barrière thermiquement isolante secondaire et la membrane d'étanchéité secondaire au niveau d'une zone d'angle de la cuve.
- **La** **figure 5** est une vue éclatée partielle de la barrière thermiquement isolante secondaire et de la membrane d'étanchéité secondaire au niveau d'un interstice entre deux premiers panneaux isolants adjacents.
- **La** **figure 6** est une vue en coupe illustrant partiellement la barrière thermiquement isolante secondaire et la membrane d'étanchéité secondaire au niveau d'une zone d'angle de la cuve.
- **La** **figure 7** est une vue détaillée de la zone VII de la figure 6.
- **La** **figure 8** est une vue de dessus illustrant partiellement la membrane d'étanchéité secondaire de l'une des parois au niveau d'un angle de la cuve.
- **La** **figure 9** est une vue en coupe illustrant la barrière thermiquement isolante secondaire, la membrane d'étanchéité secondaire et la barrière thermiquement isolante primaire au niveau d'une zone d'angle de la cuve.
- **La** **figure 10** est une vue en perspective illustrant la barrière thermiquement isolante secondaire, la membrane d'étanchéité secondaire et la barrière thermiquement isolante primaire au niveau d'une zone d'angle de la cuve.
- **La** **figure 11** est une vue en perspective éclatée illustrant la membrane d'étanchéité primaire au niveau d'une zone d'angle de la cuve.
- **La** **figure 12** est une vue en perspective illustrant la membrane d'étanchéité primaire au niveau d'une zone d'angle de la cuve.
- **La** **figure 13** est une vue en coupe d'une cuve étanche et thermiquement isolante de stockage d'un fluide selon un autre mode de réalisation au niveau d'une zone d'angle entre deux parois de la cuve.
- **La** **figure 14** est une représentation schématique écorchée d'une cuve de navire méthanier et d'un terminal de chargement/déchargement de cette cuve.
- **La** **figure 15** est une vue en coupe illustrant partiellement la barrière thermiquement isolante secondaire et la membrane d'étanchéité secondaire au niveau d'une zone d'angle de la cuve selon une variante de réalisation.
- **La** **figure 16** est une vue détaillée de la zone XVI de la figure 15.
- **La** **figure 17** est une vue en perspective représentant la barrière thermiquement isolante secondaire à l'intersection entre trois parois de la cuve.
- **La** **figure 18** est une vue en perspective représentant partiellement la barrière thermiquement isolante secondaire et la barrière thermiquement isolante primaire à l'intersection entre trois parois de la cuve.
- **La** **figure 19** est une vue en perspective représentant partiellement la membrane d'étanchéité primaire à l'intersection entre trois parois de la cuve.

### Description détaillée de modes de réalisation

Par convention, les termes «externe » et « interne » sont utilisés pour définir la position relative d'un élément par rapport à un autre, par référence à l'intérieur et à l'extérieur de la cuve.

En relation avec les figures 1 et 2, on décrit la structure multicouche d'une cuve étanche et thermiquement isolante de stockage de de gaz naturel liquéfié. Chaque paroi de la cuve comporte, depuis l'extérieur vers l'intérieur de la cuve, une barrière thermiquement isolante secondaire 1 comportant des panneaux isolants 2 juxtaposés et ancrés à une structure porteuse 3 par des organes de retenue secondaires 8, une membrane d'étanchéité secondaire 4 portée par les panneaux isolants 2 de la barrière thermiquement isolante secondaire 1, une barrière thermiquement isolante primaire 5 comportant des panneaux isolants 6 juxtaposés et ancrés aux panneaux isolants 2 de la barrière thermiquement isolante secondaire 1 par des organes de retenue primaires 19 et une membrane d'étanchéité primaire 7, portée par les panneaux isolants 6 de la barrière thermiquement isolante primaire 5 et destinée à être en contact avec le gaz naturel liquéfié contenu dans la cuve.

La structure porteuse 3 peut notamment être formée de tôles métalliques autoporteuses ou, plus généralement, de tout type de cloison rigide présentant des propriétés mécaniques appropriées. La structure porteuse 3 peut notamment être formée par la coque ou la double coque d'un navire. La structure porteuse 3 comporte une pluralité de parois définissant la forme générale de la cuve, habituellement une forme polyédrique.

La barrière thermiquement isolante secondaire 1 comporte une pluralité de panneaux isolants 2 ancrés sur la structure porteuse 3 au moyen de cordons de résine, non illustrés, et/ou de goujons 8 soudés sur la structure porteuse 3.

Comme illustré sur la figure 1, les panneaux isolants 2 comportent chacun une couche de mousse polymère isolante 9 prise en sandwich entre une plaque rigide interne 10 et une plaque rigide externe 11. Les plaques rigides, interne 10 et externe 11, sont, par exemple, des plaques de bois contreplaqué collées sur ladite couche de mousse polymère isolante 9. La mousse polymère isolante peut notamment être une mousse à base de polyuréthanne. La mousse polymère est avantageusement renforcée par des fibres de verre contribuant à réduire son coefficient de contraction thermique.

Dans une zone plane d'une paroi, telle que représentée sur la figure 2, les panneaux isolants 2 présentent sensiblement une forme de parallélépipède rectangle et sont juxtaposés selon des rangées parallèles et séparés les uns des autres par des interstices 12 garantissant un jeu fonctionnel de montage. Les panneaux isolants 2 présentent par exemple une longueur de 3 m et une largeur de 1m. Les interstices 12 sont comblés avec une garniture calorifuge 13, représentée sur la figure 2, telle que de la laine de verre, de la laine de roche ou de la mousse synthétique souple à cellules ouvertes par exemple. La garniture calorifuge 13 est avantageusement réalisée dans un matériau poreux de sorte à ménager des espaces d'écoulement de gaz dans les interstices 12 entre les panneaux isolants 2. Les interstices 12 présentent par exemple, une largeur de l'ordre de 30 mm.

Comme représenté sur la figure 2, la plaque interne 10 des panneaux isolants 2 présente deux séries de rainures 14, 15, perpendiculaires l'une à l'autre, de sorte à former un réseau de rainures. Chacune des séries de rainures 14, 15 est parallèle à deux côtés opposés des panneaux isolants 2. Les rainures 14, 15 sont destinées à la réception d'ondulations, faisant saillie vers l'extérieur de la cuve, formées sur les tôles métalliques de la membrane d'étanchéité secondaire 4.

Dans le mode de réalisation représenté, dans la zone plane de la paroi, chaque plaque interne 10 comporte trois rainures 14 s'étendant selon la direction longitudinale du panneau isolant 2 et neuf rainures 15 s'étendant selon la direction transversale du panneau isolant 2.

Les rainures 14, 15 traversent partiellement ou intégralement l'épaisseur de la plaque interne 10 et débouchent dans ce dernier cas au niveau de la couche de mousse polymère isolante 9. Par ailleurs, les panneaux isolants 2 comportent dans les zones de croisement entre les rainures 14, 15, des orifices de dégagement 16 ménagés dans la couche de mousse polymère isolante 9. Les orifices de dégagements 16 permettent le logement des zones de nœud, formés aux intersections entre les ondulations des tôles métalliques de la membrane d'étanchéité secondaire 4.

Par ailleurs, la plaque interne 10 est équipée de platines métalliques 17, 18 pour l'ancrage du bord des tôles métalliques ondulées de la membrane d'étanchéité secondaire 4 sur les panneaux isolants 2. Les platines métalliques 17, 18 s'étendent selon deux directions perpendiculaires qui sont chacune parallèles à deux côtés opposés des panneaux isolants 2. Les platines métalliques 17, 18 sont fixées sur la plaque interne 10 du panneau isolant 2, par des vis, des rivets ou des agrafes, par exemple. Les platines métalliques 17, 18 sont mises en place dans des évidements ménagés dans la plaque interne 10 de telle sorte que la surface interne des platines métalliques 17, 18 affleure la surface interne de la plaque interne 10.

La plaque interne 10 est également équipée de goujons filetés 19 faisant saillie vers l'intérieur de la cuve, et destinés à assurer la fixation de la barrière thermiquement isolante primaire 5 sur les panneaux isolants 2 de la barrière thermiquement isolante secondaire 1.

Afin d'assurer la fixation des panneaux isolants 2 aux goujons 8 fixés à la structure porteuse 3, les panneaux isolants 2 sont pourvues de puits cylindrique 20, représentés sur la figure 2, traversant les panneaux isolants 2 sur toute leur épaisseur et ménagés au niveau de chacun des quatre coins des panneaux isolants 2. Les puits cylindriques 20 présentent un changement de section, non illustré, définissant des surfaces d'appui pour des écrous coopérant avec les extrémités filetées des goujons 8.

Par ailleurs, la plaque interne 10 présente le long de ses bords, dans chaque intervalle entre deux rainures successives 14, 15, un décrochement recevant des plaques de pontage 22 qui sont chacune disposées à cheval entre deux panneaux isolants 2 adjacents, en enjambant l'interstice 12 entre les panneaux isolants 2. Chaque plaque de pontage 22 est fixée contre chacun des deux panneaux isolants 2 adjacents de manière à s'opposer à leur écartement mutuel. Les plaques de pontage 22 présentent une forme parallélépipédique rectangle et sont par exemple constituées d'une plaque de bois contreplaqué. La face externe des plaques de pontage 22 est fixée contre le fond des décrochements 21. La profondeur des décrochements 21 est sensiblement égale à l'épaisseur des plaques de pontage 22 de telle sorte que la face interne des plaques de pontage 22 parvienne sensiblement au niveau des autres zones planes de la plaque interne 10. Ainsi, les plaques de pontage 22 sont en mesure d'assurer une continuité dans le portage de la membrane d'étanchéité secondaire 4.

De manière à assurer une bonne répartition des efforts de liaison entre les panneaux adjacents, une pluralité de plaques de pontage 22 s'étend le long de chaque bord de la plaque interne 10 des panneaux isolants 2, une plaque de pontage 22 étant disposée dans chaque intervalle entre deux rainures voisines 14, 15 d'une série de rainures parallèles. Les plaques de pontage 22 peuvent être fixées contre la plaque interne 10 des panneaux isolants 2 par tous moyens appropriés. Il a toutefois été constaté que la combinaison de l'application d'une colle entre la face externe des plaques de pontage 22 et la plaque interne 10 des panneaux isolants 2 et de l'utilisation d'organes de fixation mécanique, tels que des agrafes, permettant une mise en pression des plaques de pontage 22 contre les panneaux isolants 2, était particulièrement avantageuse.

La membrane d'étanchéité secondaire 4 comporte une pluralité de tôles métalliques ondulées 24 ayant chacune une forme sensiblement rectangulaire. Les tôles métalliques ondulées 24 sont disposées de manière décalée par rapport aux panneaux isolants 2 de la barrière thermiquement isolante secondaire 1 de telle sorte que chacune desdites tôles métalliques ondulées 24 s'étende conjointement sur quatre panneaux isolants 2 adjacents. Chaque tôle métallique ondulée 24 présente une première série d'ondulations 25 parallèles s'étendant selon une première direction et une seconde série d'ondulations 26 parallèles s'étendant selon une seconde direction. Les directions des séries d'ondulations 25, 26 sont perpendiculaires. Chacune des séries d'ondulations 25, 26 est parallèle à deux bords opposés de la tôle métallique ondulée 24. Les ondulations 25, 26 font saillie vers l'extérieur de la cuve, c'est-à-dire en direction de la structure porteuse 3. La tôle métallique ondulée 24 comporte entre les ondulations 25, 26, une pluralité de surfaces planes. Au niveau de chaque croisement entre deux ondulations 25, 26, la tôle métallique comporte une zone de nœud présentant un sommet en saillie vers l'extérieur de la cuve. Les ondulations 25, 26 des tôles métalliques ondulées 24 sont logées dans les rainures 14, 15 ménagées dans la plaque interne 10 des panneaux isolants 2. Les tôles métalliques ondulées 24 adjacentes sont soudées entre elles à recouvrement. L'ancrage des tôles métalliques ondulées 24 sur les platines métalliques 17, 18 est réalisé par des soudures de pointage.

Les tôles métalliques ondulées 24 comportent le long de leur bords longitudinaux et au niveau de leur quatre coins des découpes 28 permettant le passage des goujons 19 destinés à assurer la fixation de la barrière thermiquement isolante primaire 5 sur la barrière thermiquement isolante secondaire 1.

Les tôles métalliques ondulées 24 sont, par exemple, réalisées en Invar® : c'est-à-dire un alliage de fer et de nickel dont le coefficient de dilatation est typiquement compris entre 1,2.10⁻⁶ et 2.10⁻⁶ K⁻¹, ou dans un alliage de fer à forte teneur en manganèse dont le coefficient de dilatation est typiquement de l'ordre de 7.10⁻⁶ K⁻¹. De manière alternative, les tôles métalliques ondulées 24 peuvent également être réalisées en acier inoxydable ou en aluminium.

La barrière thermiquement isolante primaire 5 comporte une pluralité de panneaux isolants 6 de forme sensiblement parallélépipédique rectangle. Les panneaux isolants 6 présentent des dimensions égales aux dimensions d'un panneau isolant 2, hormis l'épaisseur qui peut être différente, de préférence plus faible que celle du panneau isolant 2. Les panneaux isolants 6 sont ici décalés par rapport aux panneaux isolants 2 de la barrière thermiquement isolante secondaire 1 de telle sorte que chaque panneau isolant 6 s'étende sur quatre panneaux isolants 2 de la barrière thermiquement isolante secondaire 1.

Les panneaux isolants 6 comportent une structure analogue à celle des panneaux isolants 2 de la barrière thermiquement isolante secondaire 1, à savoir une structure sandwich constituée d'une couche de mousse polymère isolante prise en sandwich entre deux plaques rigides, par exemple en bois contreplaqué.

La plaque interne 30 d'un panneau isolant 6 de la barrière thermiquement isolante primaire 5 est équipée de platines métalliques 32, 33 pour l'ancrage des tôles métalliques ondulées de la membrane d'étanchéité primaire 7. Les platines métalliques 32, 33 s'étendent selon deux directions perpendiculaires qui sont chacune parallèles à deux bords opposés des panneaux isolants 6. Les platines métalliques 32, 33 sont fixées dans des évidements ménagés dans la plaque interne 30 du panneau isolant 5 et fixées à celui-ci, par des vis, des rivets ou des agrafes par exemple.

Par ailleurs, la plaque interne 30 du panneau isolant 6 est pourvue d'une pluralité de fentes de relaxation 34 permettant à la membrane d'étanchéité primaire 7 de se déformer sans imposer des contraintes mécaniques trop importantes sur les panneaux isolants 6. De telles fentes de relaxation 34 sont notamment décrites dans le document FR 3001945.

La fixation des panneaux isolants 6 de la barrière thermiquement isolante primaire 5 sur les panneaux isolants 2 de la barrière thermiquement isolante secondaire est assurée au moyen des goujons filetés 19. Pour ce faire, chaque panneau isolant 6 comporte une pluralité de découpes 35 le long de ses bords et au niveau de ses coins, à l'intérieur desquelles s'étend un goujon fileté 19. La plaque externe des panneaux isolants 2 déborde à l'intérieur des découpes 35 de sorte à former une surface d'appui pour un organe de retenue qui comporte un alésage fileté enfilé sur chaque goujon fileté 19. L'organe de retenue comporte des pattes logées à l'intérieur des découpes 35 et venant en appui contre la portion de la plaque externe débordant à l'intérieur de la découpe 35 de sorte à prendre en sandwich la plaque externe entre une patte de l'organe de retenue et un panneau isolant 2 de la barrière thermiquement isolante secondaire 1 et assurer ainsi la fixation de chaque panneau isolant 6 sur les panneaux isolants 2 qu'il chevauche.

La barrière thermiquement isolante primaire 5 comporte une pluralité de plaques de fermeture 38 permettant de compléter la surface d'appui de la membrane d'étanchéité primaire 7 au niveau des découpes 35.

La membrane d'étanchéité primaire 7 est obtenue par assemblage d'une pluralité de tôles métalliques ondulées 39. Chaque tôle métallique ondulée 39 comporte une première série d'ondulations 40 parallèles, dite hautes, s'étendant selon une première direction et une seconde série d'ondulations 41 parallèles, dites basses, s'étendant selon une seconde direction perpendiculaire à la première série. Les ondulations 40, 41 font saillie vers l'intérieur de la cuve. Les tôles métalliques ondulées 39 sont, par exemple, réalisées en acier inoxydable ou en aluminium. Dans un mode de réalisation non illustré, la première et la seconde séries d'ondulations présentent des hauteurs identiques.

En revenant à la figure 1, l'on observe la structure des parois de la cuve au niveau d'un angle entre une première paroi 42 et une seconde paroi 43.

L'angle formé entre la première paroi 42 et la seconde paroi 43 est d'environ 90° dans le mode de réalisation représenté. L'angle peut toutefois présenter toute autre valeur, par exemple de l'ordre de 135°.

La barrière thermiquement isolante secondaire 1 de chaque paroi 42, 43 comporte un jeu de premiers panneaux isolants 44 qui sont chacun disposés le long de l'intersection 45 entre la structure porteuse 3 de la première paroi 42 et la structure porteuse 3 de la seconde paroi 43. Chaque premier panneau isolant 44 présente une section en forme de trapèze rectangle de sorte à former avec le premier panneau isolant 44 de l'autre paroi adjacente un coin de la barrière thermiquement isolante secondaire 1.

Ainsi, chaque premier panneau isolant 44 de la barrière thermiquement isolante secondaire 1 comporte une face externe 46 fixée contre la structure porteuse 3, une face interne 47 de support de la membrane d'étanchéité secondaire 4, un bord 48 opposé à l'intersection 45 entre les structure porteuses 3 de la première et de la seconde parois 42, 43 qui est perpendiculaire aux faces interne 46 et externe 47 et un bord 49 adjacent à l'intersection 45 qui est biseauté et coopère avec un bord biseauté 49 du premier panneau isolant 44 de l'autre paroi de manière à former un coin de la barrière thermiquement isolante secondaire 1. Chaque premier panneau isolant 44 comporte en outre deux bords extrêmes parallèles, opposés l'un à l'autre selon la direction de l'intersection 45, qui sont perpendiculaires à la face interne 46, à la face externe 47 et au bord 48 opposé à l'intersection 45.

Selon un mode de réalisation, les premiers panneaux isolants 44 de l'une et l'autre des parois 42, 43 sont raccordés l'un à l'autre par collage, via leur bord biseauté 49 de manière à former une structure d'angle pré-assemblée.

Par ailleurs, la barrière thermiquement isolante secondaire 1 de chaque paroi 42, 43 comporte en outre un jeu de deuxièmes panneaux isolants 50 qui sont juxtaposés au jeu de premiers panneaux isolants 44 et s'étendent le long du bord 48 des premiers panneaux isolants 44 qui est tourné à l'opposé de l'intersection 49. Dans le mode de réalisation représenté, les deuxièmes panneaux isolants 50 présentent une structure similaire à celle des autres panneaux isolants 2 décrits en relation avec la figure 2.

Les deuxièmes panneaux isolants 50 sont toutefois susceptibles de présenter des largeurs différentes de celle des panneaux isolants 2. La largeur desdits seconds panneaux isolants 50 est en effet susceptible d'être adaptée afin de compenser les tolérances dimensionnelles de fabrication de la barrière thermiquement isolante secondaire et/ou afin de s'adapter aux dimensions souhaitées de la cuve. Ainsi, si dans le mode de réalisation représenté, les seconds panneaux isolants 50 comportent chacun trois rainures 14 s'étendant selon la direction longitudinale dudit second panneau isolant 50 et présentent par conséquent une largeur correspondant sensiblement à trois intervalles inter-ondulations comme les autres panneaux isolants standards 2 de la barrière thermiquement isolante secondaire 1, ils peuvent également présenter une largeur différente, tel que, par exemple, une largeur correspondant sensiblement à deux intervalles inter-ondulations, en fonction des dimensions de la cuve que l'on souhaite réaliser.

Chaque premier panneau isolant 44 est associé avec le second panneau isolant 50 adjacent par l'intermédiaire d'une pluralité d'éléments de pontage 22 qui sont d'une part fixés à un bord de la face interne 47 du premier panneau isolant 44 et à un bord de la face interne 10 du second panneau isolant 50 adjacent de manière à s'opposer à une écartement mutuel du premier et du second panneaux isolants 44, 50 adjacents.

En relation avec la figure 3, l'on observe de manière détaillée la structure de premiers panneaux isolants 44 de la membrane d'isolation thermique secondaire 1.

Les premiers panneaux isolants 44 comportent une structure sandwich constituée d'une couche de mousse polymère isolante 51 en sandwich entre deux plaques rigides 52, 53, par exemple en bois contreplaqué.

La plaque interne 52 des premiers panneaux isolants 44 présente un réseau de rainures 54, 55 perpendiculaires destinées à recevoir les ondulations d'un jeu de premières tôles métalliques de la membrane d'étanchéité secondaire 4. La plaque interne 52 présente une unique rainure 54 s'étendant parallèlement à l'intersection 45 entre la structure porteuse 3 de la première paroi 42 et celle de la seconde paroi 43. La plaque interne 52 présente en outre une pluralité de rainures 55 perpendiculaires à ladite unique rainure 54 qui sont parallèles les unes aux autres et espacées les unes des autres dans la direction de l'intersection 45.

La plaque interne 52 des premiers panneaux isolants 44 est en outre équipée d'une pluralité de platines métalliques 56, par exemple en invar, destinées à l'ancrage de bords de premières tôles métalliques de la membrane d'étanchéité secondaire, qui seront décrites de manière détaillée par la suite. Les platines métalliques 56, sont disposées selon deux directions perpendiculaires qui sont respectivement parallèles aux deux bords extrêmes 58, 59 dudit premier panneau isolant 54 et au bord 48 dudit premier panneau isolant 44 qui est tourné à l'opposé de l'intersection 45. Les platines métalliques 56 sont également destinées à l'ancrage de cornières métalliques qui permettent d'assurer l'étanchéité de la membrane d'étanchéité secondaire dans la zone d'angle et qui seront décrites de manière détaillée par la suite. Les platines métalliques 56, sont fixées dans des évidements ménagés dans la plaque interne 52 du premier panneau isolant 44 et fixées à celui-ci, par des vis, des rivets ou des agrafes par exemple.

Dans le mode de réalisation représenté, une des platines métalliques 56, destinées à l'ancrage des cornières métalliques, est disposée dans chacun des intervalles entre deux ondulations 55. Par ailleurs, la plaque interne 52 est également recouverte d'éléments de protection thermique 57, par exemple formés d'un film composite, qui sont disposés dans les zones qui, d'une part, sont en vis-à-vis de la zone de soudage des cornières métalliques sur les premières tôles métalliques, et, d'autre part, ne sont pas recouvertes de platines métalliques 56. Les éléments de protection thermique 57 permettent ainsi de protéger les premiers panneaux isolants 44 et notamment leur couche de mousse polymère 51 contre des températures susceptibles de les dégrader lors des opérations de soudage des cornières métalliques et des premières tôles métalliques.

La plaque interne 52 est également équipée de platines d'ancrage 58 destinées à assurer la fixation de blocs d'isolation de la barrière thermiquement isolante primaire contre les premiers panneaux isolants 44 de la barrière thermiquement isolante secondaire 1. Les platines d'ancrage 58 sont par exemples collées sur la plaque interne 52.

En relation avec la figure 4, on observe la structure de la membrane d'étanchéité secondaire 4 au niveau d'un angle de la cuve.

La membrane d'étanchéité secondaire 4 de chaque paroi 42, 43 comporte un jeu de premières tôles métalliques 60 de forme générale sensiblement rectangulaire. Les premières tôles métalliques 60 présentent un premier et un seconds bords 61, 62 opposés, parallèles à l'intersection entre les deux parois. Le premier bord 61 est tourné vers l'autre paroi adjacente et le second bord 62 est tourné à l'opposé de l'autre paroi adjacente. Les premières tôles métalliques 60 comportent en outre un troisième et un quatrième bords 63, 64 parallèles qui sont perpendiculaires au premier et au second bords 61, 62.

Les premières tôles métalliques 60 présentent chacune une seule ondulation 65 s'étendant selon une direction parallèle au premier et au second bords 61, 62. Les premières tôles métalliques 60 présentent en outre une série de plusieurs ondulations 66 perpendiculaires à ladite ondulation 65, c'est-à-dire parallèles au troisième et au quatrième bords 63, 64. A titre d'exemple, les premières tôles métalliques 60 présentent ici une série de neuf ondulations 66 perpendiculaires à l'unique ondulation 65. Les ondulations 65, 66 font saillie vers l'extérieur de la cuve en direction de la structure porteuse 3 et sont chacune reçues dans une rainure respective 54, 55 ménagée dans la plaque interne 52 de l'un des premiers panneaux isolants 44.

Chacune des premières tôles métalliques 60 est disposée à cheval sur deux premiers panneaux isolants 44 adjacents et ancrée sur chacun d'eux. Pour ce faire, les premiers bords 61 des premières tôles métalliques 60 sont soudés sur les platines métalliques 56 tandis que leur troisième et quatrième bords 63, 64 sont soudés au droit d'une protection thermique 105. Les premières tôles métalliques 60 sont en outre soudées de manière étanche, à recouvrement les unes aux autres au niveau de leur troisième et quatrièmes bords 63, 64.

Par ailleurs, la membrane d'étanchéité secondaire 2 comporte une pluralité de cornières métalliques 67. Les cornières métalliques 67 sont avantageusement réalisées dans un matériau identique à celui des autres tôles métalliques 24, 60 de la membrane d'étanchéité secondaire 4.

Chaque cornière métallique 67 présente deux ailes qui sont respectivement parallèles à l'une et à l'autre des deux parois 42, 43 adjacentes. Chaque cornière métallique 67 présente une ondulation 68 s'étendant d'un bout à l'autre de la cornière métallique 67 le long de ses deux ailes de manière à permettre une déformation de la cornière métallique 67 selon une direction parallèle l'intersection entre les structures porteuses des deux parois 42, 43 adjacentes. La membrane d'étanchéité secondaire 4 comporte, pour chacune des directions d'ondulations 66, une cornière métallique 67 dont l'ondulation 68 s'étend dans le prolongement de l'une des ondulations 66 de manière à assurer une continuité du réseau d'ondulations de la membrane d'étanchéité secondaire 4 au niveau de l'angle de la cuve.

Chaque cornière métallique 67 est soudée sur deux platines métalliques 56 du premier panneau isolant 44 de la première paroi 42 par l'une de ses ailes et est soudée sur deux platines métalliques 56 du premier panneau isolant de la deuxième paroi 43 par l'autre de ses ailes. Chaque aile est soudée à une platine métallique 56 dans sa zone d'angle entre l'un de ses bords latéraux et son bord d'extrémité opposée à l'autre aile.

Par ailleurs, en relation avec la figure 5, l'on observe que les premiers panneaux isolants 44 adjacents d'une même paroi sont associés l'un à l'autre par l'intermédiaire d'une plaque de pontage 69 qui est fixée sur la face interne 52 de chacun des deux premiers panneaux isolants 44 adjacents. La face interne de la plaque de pontage 69 est en partie recouverte d'une platine métallique 82 qui s'étend selon la direction d'implantation des platines métalliques 56 et permet un ancrage de deux cornières métalliques 67 et d'une première tôle métallique 60 au niveau de l'interstice séparant deux premiers panneaux isolants 44 adjacents. Dans une version non représentée, la platine métallique 82 est remplacée par une protection thermique et une platine métallique est appliquée sur la face intérieure des cornières métalliques 67 et des premières tôles métalliques 60.

Comme représenté sur la figure 4, le premier bord 61 de chacune des premières tôles métalliques 60 est soudé de manière étanche à l'une des ailes des cornières métalliques 67.

Par ailleurs, les premières tôles métalliques 60 présentent une pluralité d'orifices 83 au travers de chacun desquels passe un organe d'ancrage permettant d'ancrer un bloc d'isolation de la barrière thermiquement isolante primaire. En relation avec les figures 6 et 7, l'on observe qu'un écrou borgne 84 traverse chacun des orifices 83. L'écrou borgne 84 présente sur sa périphérie extérieure un filetage coopérant avec un alésage fileté ménagé dans l'une des platines d'ancrage 58. Par ailleurs, l'écrou borgne 84 présente un alésage borgne fileté destiné à recevoir un goujon de fixation des blocs d'isolation de la barrière thermiquement isolante. L'écrou borgne 84 comporte en outre une collerette 85 permettant de prendre en sandwich la première tôle métallique 60 entre ladite collerette 85 et la platine d'ancrage 58. Selon un mode de réalisation, chaque collerette 85 est soudée sur la première tôle métallique 60 en périphérie de l'orifice 83 afin d'assurer l'étanchéité de la membrane d'étanchéité secondaire.

Dans la variante représentée sur les figures 6 et 7, chaque platine d'ancrage 58 est retenue sur l'un des premiers panneaux isolants 44 par l'intermédiaire de la plaque interne 52. Pour ce faire, la platine d'ancrage 58 est reçue dans un logement de la plaque interne 52. En outre, la plaque interne 52 comporte un rebord 106 qui recouvre partiellement le logement et recouvre une portion de bordure 107 de la platine d'ancrage 58 de manière à retenir ladite platine d'ancrage 58 contre la couche de mousse polymère isolante 51. Dans un tel mode de réalisation, afin d'assurer la fixation de chaque platine d'ancrage 58 à l'un des panneaux isolants 44, la platine d'ancrage 58 est préalablement rapportée contre la couche de mousse polymère isolante 51 avant que la plaque interne 52 ne soit fixée, par exemple par collage, contre la couche de mousse polymère isolante 51. En complément, chaque platine d'ancrage 58 peut également être fixée par collage contre la couche de mousse polymère isolante 51.

Dans une autre variante de réalisation représentée sur les figures 15 et 16, chaque platine d'ancrage 58 n'est pas retenue sur l'un des panneaux isolants 44 par l'intermédiaire de sa plaque interne 52 et chaque platine d'ancrage 58 est fixée par collage sur la couche de mousse polymère isolante 51 du panneau isolant 44 respectif. Chaque platine d'ancrage 58 est placée dans un logement ménagé dans la plaque interne 52 du panneau isolant 44 respectif. De manière avantageuse, le logement ménagé dans la plaque interne 52 comporte un épaulement 108 servant de surface d'appui pour une portion de bordure interne 109 de la platine d'ancrage 58.

Selon d'autres modes de réalisation non représentés, chaque platine d'ancrage 58 peut être recouverte d'une couche de contreplaqué pourvue d'orifices autorisant le passage des écrous borgnes 85. La couche de contreplaqué contribue dans ce cas à assurer le support des premières tôles métalliques 60.

Par ailleurs, en relation avec la figure 8, l'on observe que la membrane d'étanchéité secondaire 4 de chaque paroi comporte un jeu de secondes tôles métalliques 86 qui sont, d'une part ancrées sur les seconds panneaux isolants 50 et d'autre part soudées aux premières tôles métalliques 60.

Les secondes tôles métalliques 86 présentent une forme générale sensiblement rectangulaire qui est définie par un premier et un second bords 87, 88 opposés, parallèles à l'intersection adjacente entre les deux parois 42, 43. Le premier bord 87 est tourné vers l'angle adjacent de la cuve tandis que le second bord 88 est tourné dans une direction opposée à celui-ci. Les secondes tôles métalliques 86 comportent en outre un troisième et un quatrième bords parallèles 89, dont un seul est ici représenté, qui sont perpendiculaires aux premiers et second bords 87, 88.

Dans le mode de réalisation représenté, les secondes tôles métalliques 86 présentent chacune une seule ondulation 90 s'étendant selon une direction parallèle au premier et au second bords 87, 88. Les premières tôles métalliques 86 présentent en outre une série de plusieurs ondulations 91 perpendiculaires à ladite ondulation 90, c'est-à-dire parallèles au troisième et au quatrième bords 89. A titre d'exemple, les secondes tôles métalliques 86 présentent ici une série de neuf ondulations 91.

Dans un autre mode de réalisation non représenté, les secondes tôles métalliques 86 peuvent également présenter deux ondulations 90 s'étendant selon une direction parallèle au premier et au second bords 87, 88, notamment si l'on souhaite produire un décalage différent des tôles métalliques 24 de la zone plane par rapport aux panneaux isolants standards 2 de la barrière thermiquement isolante secondaire 1.

Les ondulations 90, 91 font saillie vers l'extérieur de la cuve en direction de la structure porteuse 3 et sont chacune reçues dans une rainure respective ménagée dans la plaque interne de l'un des seconds panneaux isolants 50.

Chacune des secondes tôles métalliques 86 est disposée à cheval sur deux seconds panneaux isolants 50 adjacents et est ancrée sur chacun d'eux. Pour ce faire, les seconds panneaux isolants 50 présentent des platines métalliques 92, 93 s'étendant selon deux directions perpendiculaires qui sont chacune parallèle à deux côtés opposés des seconds panneaux isolants 50. Le second bord 88 de chacune des secondes tôles métalliques 86 est soudé sur des platines métalliques 92 et leur troisième et quatrième bords 89 sont soudés sur des platines métalliques 93. Les secondes tôles métalliques 86 sont en outre soudées de manière étanche, à recouvrement les unes aux autres au niveau de leur troisième et quatrièmes bords 89.

Par ailleurs, le premier bord 87 de chacune des secondes tôles métalliques 86 est soudé de manière étanche sur le second bord 62 de l'une des premières tôles métalliques 60. L'un parmi le second bord 62 des premières tôles métalliques 60 et le premier bord 87 des secondes tôles métalliques 86 présente un jogglinage, c'est-à-dire une partie dénivelée grâce à laquelle il vient surmonter l'autre bord. Dans le mode de réalisation représenté, le jogglinage est formé dans le second bord 87 des premières tôles métalliques 60.

Selon un mode de réalisation, le second bord 62 joggliné présente des dimensions suffisantes pour qu'une adaptation de la largeur sur laquelle se recouvrent les premières tôles métalliques 60 et les secondes tôles métalliques 86 soit au moins en mesure de compenser les tolérances de construction de la barrière thermiquement isolante secondaire 1 et de la membrane d'étanchéité secondaire 4 de la paroi en cause. Selon un mode de réalisation, le bord joggliné présente une largeur supérieure ou égale à 4 cm.

Selon un autre mode de réalisation, la largeur des premières tôles métalliques 60 est adaptée afin de compenser les tolérances de fabrication de la structure porteuse 3.

Les premiers bords 87 des secondes tôles métalliques 86 et les deuxièmes bords 62 des premières tôles métalliques 60 sont soudés les uns aux autres au droit de l'interstice séparant les premiers panneaux isolants 44 des deuxièmes panneaux isolants 50. Ainsi, les premiers bords 87 des deuxièmes tôles métalliques 86 et les deuxièmes bords 62 des premières tôles métalliques 62 reposent contre les plaques de pontage 22 associant les premiers panneaux isolants 44 et les seconds panneaux isolants 50.

Selon un mode de réalisation, une partie ou la totalité desdites plaques de pontage 22 sont équipées sur leur face interne de protection thermique, non représentées, contre lesquelles reposent les premiers bords 87 des secondes tôles métalliques 86 et les seconds bords 62 des premières tôles métalliques 60 qui sont soudés les uns aux autres.

Par ailleurs, à partir du second bord 88 des secondes tôles métalliques 86, en se dirigeant dans une direction opposée à l'angle de cuve voisin, la membrane d'étanchéité secondaire 4 comporte une pluralité de tôles métalliques 24 standards - c'est-à-dire du type équipant une zone plane telle que décrite en relation avec la figure 2. Les tôles métalliques 24 standards bordant les secondes tôles métalliques 86 sont disposés à cheval sur deux seconds panneaux isolants 50 et sur deux panneaux isolants 2 standards, l'ancrage desdites tôles métalliques 24 standards sur les seconds panneaux isolants 50 étant réalisé au moyen des platines métalliques 92, 93.

En relation avec les figures 9 et 10, l'on observe que la barrière thermiquement isolante primaire 5 comporte au niveau de l'angle de la cuve une pluralité de paires de blocs isolants 94 pré-assemblés dont l'un repose contre l'une des premières tôles métalliques 60 de la première paroi 42 et est ancré à l'un des premiers panneaux isolants 44 de la première paroi 42 tandis que l'autre repose contre l'une des premières tôles métalliques 60 de la seconde paroi 43 et est ancré à l'un des premiers panneaux isolants 44 de la seconde paroi 43.

Les blocs isolants 94 comportent une face interne sur laquelle repose une cornière 95 et une face externe reposant contre l'un des premières tôles métalliques 60. Les blocs isolants 94 présentent une structure composite et comportent une couche de mousse polymère isolante prise en sandwich entre deux plaques de bois contreplaqués collés sur ladite couche de mousse polymère.

Les cornières 95 sont des cornières métalliques, par exemple, réalisées en acier inoxydable. Les cornières 95 présentent deux ailes reposant respectivement contre la face interne de l'un et l'autre des blocs isolants 94 d'une paire de blocs isolants. En relation avec la figure 9, l'on observe que chaque aile d'une cornière présente des goujons 96 de fixation aux blocs isolants 94 qui sont soudés sur la face externe de ladite aile et font saillie vers l'intérieur de la cuve. Les blocs isolants 94 comportent des orifices qui permettent le passage des goujons 96 et sont formés sur leur face interne. Les orifices communiquent avec des puits cylindriques débouchant sur la face externe des blocs isolants. Des écrous vissés sur les goujons 96 s'appuient contre le fond des puits cylindriques et assurent ainsi la solidarisation de la cornière 95 auxdits blocs isolants 94. La cornière 95 permet ainsi de relier les blocs isolants 94 deux à deux de manière à former des modules préassemblés.

Chaque aile de chaque cornière 95 présente également un goujon 97 sur sa face interne, faisant saillie vers l'intérieur de la cuve. De tels goujons 97 permettant d'ancrer un équipement de soudage lors du soudage des éléments de la membrane d'étanchéité primaire 7 sur les cornières 95.

Afin d'assurer la fixation des blocs isolants 94 aux premiers panneaux isolants 44 de la barrière thermiquement isolante secondaire 1, la cornière 95 et les blocs isolants 94 sont pourvus d'orifices permettant le passage de goujons 98. Les goujons 98 sont chacun destinés à coopérer avec l'un des écrous borgnes 84, tels que décrits précédemment en relation avec la figure 7.

Par ailleurs, un raccord d'angle 99 en matière isolante, telle qu'une mousse polymère, est disposé entre les bords adjacents à l'angle de cuve des deux blocs isolants 94 et permet ainsi d'assurer une continuité de l'isolation thermique au niveau de l'angle de la cuve. En outres, des éléments isolants de jointure 100 sont insérés entre deux paires de blocs isolants 94 adjacentes de manière à assurer une continuité de l'isolation thermique.

Comme représenté sur les figures 11 et 12, les tôles métalliques 39 de la membrane d'étanchéité primaire 7 qui bordent la zone d'angle sont soudées le long de leur bord dirigé vers l'angle de la cuve sur les cornières 95. Par ailleurs, la membrane d'étanchéité primaire 7 présente une pluralité de pièces d'angle 101, métalliques, qui sont chacune soudées à cheval sur deux cornières 95 adjacentes. Les pièces d'angles 101 sont réalisées dans un matériau identique à celui des autres tôles métalliques 39 de la membrane d'étanchéité primaire 7. Chaque pièce d'angle 101 comporte deux ailes qui sont respectivement parallèles à l'une et à l'autre des deux parois adjacentes 42, 43. Chaque pièce d'angle 101 comporte une ondulation 102 s'étendant d'un bout à l'autre de la pièce d'angle 101 le long des deux ailes de manière à permettre une déformation de la pièce d'angle 101 selon une direction parallèle à l'arête formé à l'intersection des parois 42, 43.

L'ondulation 102 de chacune des pièces d'angle 101 s'étend dans le prolongement de l'une des directions des ondulations 41 de la membrane d'étanchéité primaire 7 de sorte à assurer une continuité du réseau d'ondulation de la membrane d'étanchéité primaire 7 au niveau de l'angle de la cuve.

Notons que si un seul des angles de la cuve a été décrit ci-dessus, les autres angles de la cuve peuvent également présenter un agencement identique.

Sur les figures 17 et 18, l'on observe la structure des barrières thermiquement isolantes secondaire 1 et primaire 5 à l'intersection entre trois parois 42, 43, 110. Les trois parois qui sont ici représentées constituent respectivement une paroi de fond 42, une paroi d'extrémité 43 et une paroi oblique inférieure 110. La paroi oblique inférieure 110 forme un angle de 135 ° avec la paroi de fond 42. La paroi oblique inférieure 110 et la paroi de fond 42 sont perpendiculaires à la paroi d'extrémité 43. Un tel agencement correspond par exemple à une cuve qui présente une forme générale polyédrique et qui comporte deux parois d'extrémité de forme octogonales qui sont reliées l'une à l'autre par huit parois, à savoir une paroi de fond et une paroi de plafond horizontales, deux parois latérales verticales, deux parois obliques inférieures reliant chacune l'une des parois latérales à la paroi de plafond et deux parois obliques inférieures reliant chacune l'une des parois latérales à la paroi de fond.

Dans cette zone, comme représenté sur la figure 17, la barrière thermiquement isolante secondaire 1 comporte une structure d'angle pré-assemblée qui est formée d'un jeu de trois premiers panneaux isolants 44a, 44b, 44c qui sont respectivement fixés contre la structure porteuse de chacune des trois parois 42, 43 110. Les panneaux isolants 44a, 44b, 44c présentent chacun une structure sandwich identique à celle des panneaux isolants 44 décrits en relation avec la figure 3, à savoir constituée d'une couche de mousse polymère isolante en sandwich entre deux plaques rigides par exemple en bois contreplaqué.

Les panneaux isolants 44b et 44c sont fixés l'un à l'autre via des bords biseautés présentant une inclinaison de 67.5°. Par ailleurs, les panneaux isolants 44b et 44c sont chacun fixés au panneau isolant 44a via des bords biseautés présentant une inclinaison de 45°. On observe par ailleurs que le panneau isolant 44a ne présente pas une forme parallélépipédique mais une forme en V dont l'angle correspond à l'angle entre la paroi de fond 42 et la paroi oblique inférieure 110.

Par ailleurs, une pièce d'angle 111, métallique et étanche, représentée sur la figure 17, est fixée à cheval entre les trois panneaux isolants 44a, 44b et 44c. Pour ce faire, la pièce d'angle 111 comporte trois ailes qui sont respectivement parallèles à chacune des trois parois 42, 43, 110. La pièce d'angle 111 est avantageusement réalisée dans un matériau identique à celui des autres tôles métalliques 24, 60 de la membrane d'étanchéité secondaire 4.

Par ailleurs, la membrane d'étanchéité secondaire 4 comporte également dans cette zone des cornières métalliques qui présentent chacune deux ailes qui sont respectivement parallèles à deux parois adjacentes. Les cornières métalliques présentent une structure identique à celle décrites précédemment en relation avec la figure 4. Par ailleurs, dans cette zone, la membrane d'étanchéité secondaire comporte des tôles métalliques ondulées singulières, non représentées. La membrane d'étanchéité secondaire 4 comporte notamment, ancrée à chacun des panneaux isolants référencés 44b et 44c, une tôle métallique ondulée ne comportant que deux ondulations perpendiculaires l'une à l'autre s'étendant dans le prolongement des autres ondulations. Deux bords de ladite tôle, tournés vers une paroi adjacente sont soudés sur ledit panneau isolants 44c ou 44d et soudés à des cornières métalliques. Les autres bords, tournés à l'opposé des parois adjacentes sont chacun soudés à recouvrement avec le troisième ou quatrième bord d'une première tôle métallique adjacente. Ce soudage à recouvrement s'effectue par l'intermédiaire d'un bord joggliné présentant des dimensions suffisantes pour qu'une adaptation de la largeur de recouvrement soit au moins en mesure de compenser les tolérances de construction de la barrière thermiquement isolante secondaire 1 et de la membrane d'étanchéité secondaire 4.

Par ailleurs, comme représenté sur la figure 18, la barrière thermiquement isolante primaire 5 comporte au niveau de l'intersection entre les trois parois 42, 43, 110, une structure d'angle pré-assemblée qui est constituée de trois blocs isolants 94a, 94b, 94c reposant respectivement contre chacun des trois panneaux isolants 44a, 44b, 44c. Les blocs isolants 94a, 94b, 94c sont ancrés à leur panneau isolant 44a, 44b, 44c respectif au moyen de goujons filetés qui passent au travers d'orifices ménagés dans lesdits blocs isolants 94a, 94b, 94c et qui coopèrent chacun avec un écrou borgne 84, tels que décrits en relation avec la figure 7. Par ailleurs, les blocs isolants 94a, 94b, 94c comportent chacun une face interne sur laquelle repose une pièce d'angle 112 comportant trois ailes reposant respectivement contre chacune desdits blocs isolants 94a, 94b, 94c.

Par ailleurs, comme représenté sur la figure 19, chacune des tôles métalliques 39 de la membrane d'étanchéité primaire 7 qui est disposée au niveau d'un angle d'une paroi 42, 43, 110 comporte deux bords, tournés vers les parois adjacentes qui sont soudés sur la pièce d'angle 112 et sur les cornières 95 adjacentes.

Le mode de réalisation représenté sur la figure 13 diffère principalement du mode de réalisation décrit ci-dessus en ce que la membrane d'étanchéité secondaire 4 comporte des ondulations 103 faisant saillie vers l'intérieur de la cuve, et non vers l'extérieur. Les tôles métalliques standards 24 ainsi que les premières tôles métalliques 60 et les secondes tôles métalliques 86 de la membrane d'étanchéité secondaire 4 comportent également deux séries d'ondulations perpendiculaires 103.

Aussi, dans ce mode de réalisation, la plaque externe 30 des panneaux isolants 6 et des blocs isolants 94 de la barrière thermiquement isolante primaire 5 présentent deux séries de rainures 104 perpendiculaires l'une à l'autre de sorte à former un réseau de rainures. Les rainures 104 sont ainsi destinées à la réception des ondulations 103, faisant saillie vers l'intérieur de la cuve, formées sur les tôles métalliques 24, 60, 86 de la membrane d'étanchéité secondaire 4.

Dans un tel mode de réalisation, la membrane d'étanchéité secondaire comprend une structure générale identique à celle décrite précédemment, la seule différence résidant dans l'orientation des ondulations 66 vers l'intérieur de la cuve.

La technique décrite ci-dessus pour réaliser une cuve étanche et thermiquement isolante de stockage d'un fluide peut être utilisée dans différents types de réservoirs, par exemple pour constituer un réservoir de GNL dans une installation terrestre ou dans un ouvrage flottant comme un navire méthanier ou autre.

En référence à la figure 14, une vue écorchée d'un navire méthanier 70 montre une cuve étanche et isolée 71 de forme générale prismatique montée dans la double coque 72 du navire. La paroi de la cuve 71 comporte une barrière étanche primaire destinée à être en contact avec le GNL contenu dans la cuve, une barrière étanche secondaire agencée entre la barrière étanche primaire et la double coque 72 du navire, et deux barrières isolante agencées respectivement entre la barrière étanche primaire et la barrière étanche secondaire et entre la barrière étanche secondaire et la double coque 72.

De manière connue en soi, des canalisations de chargement/déchargement 73 disposées sur le pont supérieur du navire peuvent être raccordées, au moyen de connecteurs appropriées, à un terminal maritime ou portuaire pour transférer une cargaison de GNL depuis ou vers la cuve 71.

La figure 14 représente un exemple de terminal maritime comportant un poste de chargement et de déchargement 75, une conduite sous-marine 76 et une installation à terre 77. Le poste de chargement et de déchargement 75 est une installation fixe off-shore comportant un bras mobile 74 et une tour 78 qui supporte le bras mobile 74. Le bras mobile 74 porte un faisceau de tuyaux flexibles isolés 79 pouvant se connecter aux canalisations de chargement/déchargement 73. Le bras mobile 74 orientable s'adapte à tous les gabarits de méthaniers. Une conduite de liaison non représentée s'étend à l'intérieur de la tour 78. Le poste de chargement et de déchargement 75 permet le chargement et le déchargement du méthanier 70 depuis ou vers l'installation à terre 77. Celle-ci comporte des cuves de stockage de gaz liquéfié 80 et des conduites de liaison 81 reliées par la conduite sous-marine 76 au poste de chargement ou de déchargement 75. La conduite sous-marine 76 permet le transfert du gaz liquéfié entre le poste de chargement ou de déchargement 75 et l'installation à terre 77 sur une grande distance, par exemple 5 km, ce qui permet de garder le navire méthanier 70 à grande distance de la côte pendant les opérations de chargement et de déchargement.

Pour engendrer la pression nécessaire au transfert du gaz liquéfié, on met en œuvre des pompes embarquées dans le navire 70 et/ou des pompes équipant l'installation à terre 77 et/ou des pompes équipant le poste de chargement et de déchargement 75.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Cuve étanche et thermiquement isolante destinée au stockage d'un fluide, ladite cuve présentant une pluralité de parois (42, 43) présentant une structure multicouche comportant successivement, dans le sens de l'épaisseur depuis l'extérieur vers l'intérieur de la cuve, une barrière thermiquement isolante secondaire (1) retenue contre une structure porteuse (3), une membrane d'étanchéité secondaire (4) portée par la barrière thermiquement isolante secondaire (1), une barrière thermiquement isolante primaire (5) reposant contre la membrane d'étanchéité secondaire (4) et une membrane d'étanchéité primaire (7) portée par la barrière thermiquement isolante primaire (5) et destinée à être en contact avec le fluide contenu dans la cuve ;
une première des parois (42, 43) présentant une barrière thermiquement isolante secondaire (1) comprenant :
- un premier panneau isolant (44) disposé le long de l'intersection (45) entre la structure porteuse (3) de ladite première paroi (42) et la structure porteuse (3) d'une seconde paroi (43) adjacente ; et
- un deuxième panneau isolant (50) juxtaposé au premier panneau isolant (44) le long d'un bord (48) dudit premier panneau isolant (44) opposé à la deuxième paroi (43) ;
le premier et le deuxième panneaux isolants (44, 50) présentant chacun une face interne opposée à la structure porteuse (3) équipée d'une platine métallique (56, 82, 92, 93) ;
la première paroi (42) présentant une membrane d'étanchéité secondaire (4) comportant :
- une première tôle métallique (60) présentant au moins deux ondulations (65, 66) perpendiculaires et présentant un premier et un second bords (61, 62) opposés et parallèles à l'intersection (45) entre la structure porteuse (3) de la première paroi (42) et la structure porteuse (3) de la seconde paroi (43), le premier bord (61) étant plus proche de la seconde paroi (43) que le second bord (62) ; le premier bord (61) de la première tôle métallique (60) étant, d'une part, soudé sur la platine métallique (56) du premier panneau isolant (44) pour retenir la première tôle métallique (60) contre le premier panneau isolant (44) et d'autre part, soudé à une première aile d'une cornière métallique (67) qui présente une seconde aile soudée à une tôle métallique (60) de la membrane d'étanchéité secondaire (4) de la deuxième paroi (43) ; et
- une seconde tôle métallique (86) présentant au moins deux ondulations (90, 91) perpendiculaires, l'une desdites ondulations (91) étant disposée dans le prolongement de l'une des ondulations (66) de la première tôle métallique(60), la seconde tôle métallique (86) présentant un premier et un second bords (87, 88) opposés et parallèles à l'intersection (45) entre la structure porteuse (3) de la première paroi (42) et la structure porteuse (3) de la seconde paroi (43), le premier bord (87) étant plus proche de la seconde paroi (43) que le second bord (88) ; le second bord (62) de la première tôle métallique (60) et le premier bord (87) de la seconde tôle métallique (86) sont soudés l'un à l'autre, l'un parmi le second bord (62) de la première tôle métallique (60) et le première bord (87) de la seconde tôle métallique (86) étant un bord joggliné permettant un soudage par recouvrement de la première et de la seconde tôles métalliques (60, 86).
la cuve étant **caractérisée en ce que** le second bord (88) de la seconde tôle métallique (86) est soudé sur la platine métallique (92) du deuxième panneau isolant (50).

2. Cuve selon la revendication 1, dans laquelle le bord joggliné présente une largeur supérieure à 4 centimètres.

3. Cuve selon la revendication 1 ou 2, dans laquelle la membrane d'étanchéité secondaire (4) de la première paroi comporte en outre, dans une zone plane, s'étendant à partir du second bord (88) de la seconde tôle métallique (86) vers une troisième paroi opposée à la seconde paroi (42), une pluralité de tôles métalliques (24) standards qui présentent chacune au moins deux ondulations (25, 26) perpendiculaires dont l'une est parallèle à l'intersection, les ondulations (25, 26) parallèles à l'intersection de la pluralité de tôles métalliques (24) standards étant séparées les unes des autres par un distance inter-ondulation standard et dans lequel une ondulation (65) de la première tôle métallique (60) qui est parallèle à l'intersection est séparée d'une ondulation (90) de la seconde tôle métallique (86) qui est parallèle à l'intersection par une distance inter-ondulation différente de la distance inter-ondulation standard.

4. Cuve selon l'une quelconque des revendications 1 à 3, dans laquelle le second bord (62) de la première tôle métallique (60) et le premier bord (87) de la seconde tôle métallique (86) sont soudés l'un à l'autre au droit d'un interstice séparant le premier et le deuxième panneaux isolants (44, 50).

5. Cuve selon la revendication 4, dans laquelle le premier panneau isolant (44) est associé au deuxième panneau isolant (50) par l'intermédiaire d'une pluralité d'éléments de pontage (22), chaque élément de pontage (22) étant, d'une part, fixé à un bord de la face interne du premier panneau isolant (44) et, d'autre part, fixé à un bord en vis-à-vis de la face interne du deuxième panneau isolant (50) de manière à s'opposer à un écartement mutuel du premier et deuxième panneaux isolants (44, 50).

6. Cuve selon la revendication 5, dans laquelle les éléments de pontage (22) sont des plaques de pontage qui présentent chacune une face externe reposant contre la face interne du premier et du deuxième panneaux isolants (44, 50) et une face externe, au moins l'une des plaques de pontage présentant une face interne équipée d'une platine métallique, le second bord (62) de la première tôle métallique (60) et le premier bord (87) de la seconde tôle métallique (86) étant soudés sur ladite platine métallique.

7. Cuve selon l'une quelconque des revendications 1 à 6, dans laquelle la première tôle métallique (60) comporte une pluralité d'ondulations (66) s'étendant selon une direction sécante à la deuxième paroi (43) et une seule ondulation (65) s'étendant selon un axe parallèle à l'intersection entre la première et la seconde parois (42, 43).

8. Cuve selon l'une quelconque des revendications 1 à 7, dans laquelle la seconde tôle métallique (86) comporte une pluralité d'ondulations (91) s'étendant selon une direction sécante à la deuxième paroi et une ou deux ondulations (90) s'étendant chacune selon un axe parallèle à l'intersection (45) entre la première et la seconde parois (42, 43).

9. Cuve selon l'une quelconque des revendications 1 à 8, dans laquelle la cornière métallique (67) comporte une ondulation (68) s'étendant d'un bout à l'autre de ladite cornière métallique (67), le long de la première et de la seconde ailes, de sorte à permettre une déformation de la cornière métallique (67) selon une direction parallèle à l'intersection (45) entre la première et de la seconde parois (42, 43), ladite ondulation (68) s'étendant dans le prolongement de l'une des ondulations (66) de la première tôle métallique (60) qui s'étend selon une direction sécante à la deuxième paroi (43).

10. Cuve selon l'une quelconque des revendications 1 à 9, dans laquelle la ou chaque cornière métallique (67) est en outre soudée sur la platine métallique (56) du premier panneau isolant (44).

11. Cuve selon l'une quelconque des revendications 1 à 10, dans laquelle les ondulations (65, 66, 90, 91) de la première et de la seconde tôles métalliques (60, 86) font saillie vers l'extérieur de la cuve en direction de la structure porteuse, la face interne du premier et du second panneaux isolants (44, 50) présentant des rainures (14, 15, 55, 54) perpendiculaires recevant respectivement les ondulations (65, 66, 90, 91) de la première et de la seconde tôles métalliques (60, 86).

12. Cuve selon la revendication 11, dans laquelle le premier panneau isolant (44) comporte, dans chaque intervalle entre deux rainures (55) sécantes à la seconde paroi (43), une platine métallique (56) sur laquelle sont soudés le premier bord (61) de la première tôle métallique (60) et la première aile de la ou de l'une des cornières métalliques (67).

13. Cuve selon l'une quelconque des revendications 1 à 10, dans laquelle les ondulations (103) de la première et de la seconde tôles métalliques (60, 86) font saillie vers l'intérieur de la cuve, la barrière thermiquement isolante primaire (5) comportant des panneaux isolants (4, 94) présentant chacun une face externe présentant des rainures perpendiculaires recevant les ondulations (103) de la première et de la seconde tôles métalliques (60, 86) de la membrane d'étanchéité secondaire (4).

14. Cuve selon l'une quelconque des revendications 1 à 13, dans laquelle la barrière thermiquement isolante secondaire (1) de première paroi (42) comporte en outre, dans une zone plane s'étendant à partir d'un bord du deuxième panneau isolant (50) opposé à la seconde paroi (43) vers une troisième paroi opposée à la seconde paroi (42), une pluralité de panneaux isolants (2) standards juxtaposés présentant chacun une forme de parallélépipède rectangle et une face interne (10) opposée à la paroi porteuse (3) qui est équipée d'une platine métallique (17, 18) et dans laquelle la membrane d'étanchéité secondaire (4) de la première paroi (42) comporte en outre, dans une zone plane s'étendant à partir du second bord (88) de la seconde tôle métallique (86) vers la troisième paroi, une pluralité de tôles métalliques (24) standards qui présentent chacune au moins deux ondulations (25, 26) perpendiculaires et qui sont soudées les unes aux autres et sont chacune disposées à cheval sur plusieurs desdits panneaux isolants (2) standards et soudées sur les platines métalliques (17, 18) desdits panneaux isolants (2) standards, l'une desdites tôles métalliques (24) standards bordant la seconde tôle métallique (86) présentant un bord dirigé vers la seconde paroi (43) qui est, d'une part, soudé sur la platine métallique (92) du deuxième panneau isolant (50) et, d'autre part, soudé sur le second bord (88) de la seconde tôle métallique (86).

15. Cuve selon la revendication 14, dans laquelle les panneaux isolants (2) standards présentent des dimensions identiques et dans laquelle le deuxième panneau isolant (50) présente une dimension dans une direction s'étendant d'un bord dirigé en vis-à-vis de la seconde paroi (43) vers un bord opposé à la seconde paroi différente de la dimension correspondante des panneaux isolants (2) standards.

16. Cuve selon l'une quelconque des revendications 1 à 15, dans laquelle la barrière thermiquement isolante primaire (5) de la première paroi (42) comporte un premier bloc isolant (94) qui est fixé sur le premier panneau isolant (44) de la barrière thermiquement isolante secondaire (1) au moyen d'un organe de fixation (84) et dans laquelle la première tôle métallique (60) présente un orifice (83) de passage de l'organe de fixation (84, 98) et est soudée en périphérie dudit orifice (83) à l'organe de fixation (84, 98).

17. Cuve selon la revendication 16, dans laquelle le premier bloc isolant (94) est fixé sur le premier panneau isolant (44) au moyen d'un goujon fileté (98) passant au travers d'un orifice ménagé dans ledit premier bloc isolant (94), ledit goujon fileté (98) coopérant avec un alésage fileté ménagé dans un écrou borgne (84), ledit écrou borgne (84) traversant l'orifice (83) ménagé dans la première tôle métallique (60) et présentent un filetage coopérant avec un alésage fileté ménagé dans une platine d'ancrage (58) fixée sur le premier panneau isolant (44), l'écrou borgne (84) comportant en outre une collerette (85) qui plaque la première tôle métallique (60) contre le premier panneau isolant (44) et qui est soudée sur la première tôle métallique (60) en périphérie dudit orifice (83).

18. Cuve selon l'une quelconque des revendications 1 à 17, dans lequel le premier panneau isolant (44) compose avec un premier panneau isolant (44) de la seconde paroi (43) une structure d'angle pré-assemblée formant un coin de la cuve à l'intersection entre la première et la seconde parois (42, 43).

19. Navire (70) pour le transport d'un fluide, le navire comportant une double coque (72) et une cuve (71) selon l'une quelconque des revendications 1 à 18 disposée dans la double coque.

20. Procédé de chargement ou déchargement d'un navire (70) selon la revendication 19, dans lequel on achemine un fluide à travers des canalisations isolées (73, 79, 76, 81) depuis ou vers une installation de stockage flottante ou terrestre (77) vers ou depuis la cuve du navire (71).

21. Système de transfert pour un fluide, le système comportant un navire (70) selon la revendication 19, des canalisations isolées (73, 79, 76, 81) agencées de manière à relier la cuve (71) installée dans la coque du navire à une installation de stockage flottante ou terrestre (77) et une pompe pour entrainer un fluide à travers les canalisations isolées depuis ou vers l'installation de stockage flottante ou terrestre vers ou depuis la cuve du navire.

## Patentansprüche

1. Dichtes und wärmeisolierendes Gefäß zur Flüssigkeitsspeicherung, wobei das Gefäß eine Vielzahl von Wänden (42, 43) aufweist, welche eine mehrschichtige Struktur aufweisen, welche aufeinanderfolgend in Richtung der Dicke vom Äußeren zum Inneren des Gefäßes eine sekundäre wärmeisolierende Sperre (1), gehalten von einer Haltestruktur (3), eine sekundäre Abdichtungsmembran (4), getragen von der sekundären wärmeisolierenden Sperre (1), eine primäre wärmeisolierende Sperre (5), aufliegend auf der sekundären Abdichtungsmembran (4) und eine primäre Abdichtungsmembran (7), getragen von der primären wärmeisolierenden Sperre (5) und dazu bestimmt, mit der im Gefäß enthaltenen Flüssigkeit in Kontakt zu sein, umfasst;
wobei eine erste der Wände (42, 43) eine sekundäre wärmeisolierende Sperre (1) aufweist, umfassend:
- eine erste isolierende Platte (44) angeordnet entlang der Schnittstelle (45) zwischen der Haltestruktur (3) der ersten Wand (42) und der Haltestruktur (3) einer zweiten angrenzenden Wand (43); und
- eine zweite isolierende Platte (50), welche neben der ersten isolierenden Platte (44) entlang einer Kante (48) der ersten isolierenden Platte (44), welche gegenüber der zweiten Wand (43) liegt, angeordnet ist;
wobei die erste und zweite isolierende Platte (44, 50) jeweils eine Innenseite, welche gegenüber der Haltestruktur (3) angeordnet ist und mit einer Metallplatte (56, 82, 92, 93) ausgestattet ist, aufweisen;
wobei die erste Wand (42) eine sekundäre Abdichtungsmembran (4) aufweist, umfassend:
- ein erstes Metallblech (60), welches mindestens zwei senkrechte Wellen (65, 66) und eine erste und eine zweite Kante (61, 62), welche gegenüberliegend und parallel zur Schnittstelle (45) zwischen der Haltestruktur (3) der ersten Wand (42) und der Haltestruktur (3) der zweiten Wand (43) angeordnet sind, aufweist, wobei die erste Kante (61) näher an der zweiten Wand (43) ist, als die zweite Kante (62); wobei die erste Kante (61) des ersten Metallblechs (60) zum einen auf die Metallplatte (56) der ersten isolierenden Platte (44) geschweißt ist, um das erste Metallblech (60) gegen die erste isolierende Platte (44) zu halten, und zum anderen geschweißt ist auf einen ersten Flügel eines metallischen Winkelstückes (67), welches einen zweiten Flügel, welcher auf ein Metallblech (60) der sekundären Abdichtungsmembran (4) der zweiten Wand (43) geschweißt ist, aufweist; und
- ein zweites Metallblech (86), welches mindestens zwei senkrechte Wellen (90, 91) aufweist, wobei eine der Wellen (91) in der Verlängerung einer der Wellen (66) des ersten Metallbleches (60) angeordnet ist, wobei das zweite Metallblech (86) eine erste und eine zweite Kante (87, 88) aufweist, welche gegenüberliegend und parallel zur Schnittstelle (45) zwischen der Haltestruktur (3) der ersten Wand (42) und der Haltestruktur (3) der zweiten Wand (43) angeordnet ist, wobei die erste Kante (87) näher an der zweiten Wand (43) ist, als die zweite Kante (88);
- wobei die zweite Wand (62) des ersten Metallblechs (60) und die erste Kante (87) des zweiten Metallblechs (88) miteinander verschweißt sind, wobei eine der Kanten (62) des ersten Metallblechs (60) und die erste Kante (87) des zweiten Metallblechs (86) umgebogene Kanten darstellen, um die überdeckende Verschweißung des ersten und des zweiten Metallblechs (60, 86) zu ermöglichen,
wobei das Gefäß **dadurch gekennzeichnet ist, dass** die zweite Kante (88) des ersten Metallblechs (86) auf eine Metallplatte (92) der zweiten isolierenden Platte (50) geschweißt ist.

2. Gefäß gemäß Anspruch 1, wobei die umgebogene Kante eine Breite von größer als 4 cm aufweist.

3. Gefäß gemäß Anspruch 1 oder 2, wobei die sekundäre Abdichtungsmembran (4) der ersten Wand weiterhin umfasst in einem planen Bereich, welcher sich von der zweiten Kante (88) des zweiten Metallblechs (86) zu einer dritten Wand, welche gegenüber der zweiten Wand (42) liegt, erstreckt, eine Vielzahl von standardisierten Metallblechen (24), welche jeweils mindestens zwei senkrechte Wellen (25, 26) aufweisen, von denen eine parallel zur Schnittstelle ist, wobei die standardisierten, parallel zur Schnittstelle der Vielzahl der Metallbleche (24) angeordneten Wellen (25, 26) voneinander beabstandet sind durch einen standardisierten Abstand zwischen den Wellen und wobei eine Welle (65) des ersten Metallblechs (60), welche parallel zur Schnittstelle ist, von einer Welle (90) des zweiten Metallblechs (86), welche parallel zur Schnittstelle ist, durch einen Abstand zwischen den Wellen, welcher sich von dem standardisierten Abstand zwischen den Wellen unterscheidet, getrennt ist.

4. Gefäß gemäß einem der Ansprüche 1 bis 3, wobei die zweite Kante (62) des ersten Metallblechs (60) und die erste Kante (87) des zweiten Metallblechs (86) miteinander am Zwischenraum, welcher die erste und die zweite isolierende Platte (44, 50) trennt, verschweißt sind.

5. Gefäß gemäß Anspruch 4, wobei die erste isolierende Platte (44) mit der zweiten isolierenden Platte (50) durch eine Vielzahl von Überbrückungselementen (22) verbunden ist, wobei jedes Überbrückungselement (22) zum einen an einer Kante der Innenseite der ersten isolierenden Platte (44) angebracht ist und zum anderen an einer Kante gegenüber der Innenseite der zweiten isolierenden Platte (50) angebracht ist, sodass sie sich einer gegenseitigen Beabstandung der ersten und der zweiten isolierenden Platte (44, 50) entgegensetzt.

6. Gefäß gemäß Anspruch 5, wobei die Verbindungselemente (22) Verbindungsplatten sind, welche jeweils eine Außenseite aufweisen, welche auf den Innenseiten der ersten und der zweiten isolierenden Platten (44, 50) aufliegen.

7. Gefäß gemäß einem der Ansprüche 1 bis 6, wobei das erste Metallblech (60) eine Vielzahl von Wellen (66) umfasst, welche sich in einer, die zweite Wand (43) schneidenden Richtung, erstrecken und eine einzige Welle (65), welche sich in einer parallelen Achse zur Schnittstelle zwischen der ersten und der zweiten Wand (42, 43) erstreckt.

8. Gefäß gemäß einem der Ansprüche 1 bis 7, wobei die zweite Metallplatte (86) eine Vielzahl von Wellen (91) umfasst, welche sich in einer, die zweite Wand schneidenden Richtung, erstrecken und eine oder zwei Wellen (90), welche sich jeweils in einer parallelen Achse zur Schnittstelle (45) zwischen der ersten und der zweiten Wand (42,43) erstrecken.

9. Gefäß gemäß einem der Ansprüche 1 bis 8, wobei das metallische Winkelstück (67) eine Welle umfasst, welche sich entlang des ersten und des zweiten Flügels von dem einen Ende bis zum anderen Ende des metallischen Winkelstückes (67) erstreckt, um eine Verformung des metallischen Winkelstückes (67) entsprechend einer parallelen Richtung zur Schnittstelle (45) zwischen der ersten und der zweiten Wand (42, 43) zu ermöglichen, wobei die Welle (68) sich in der Verlängerung einer der Wellen (66) des ersten Metallblechs (60), welches sich in einer, die zweite Wand (43) schneidenden Richtung, erstreckt, erstreckt.

10. Gefäß gemäß einem der Ansprüche 1 bis 9, wobei das oder jedes metallische Winkelstück (67) weiterhin auf der metallischen Platte (56) der ersten isolierenden Platte (44) verschweißt ist.

11. Gefäß gemäß einem der Ansprüche 1 bis 10, wobei die Wellen (65, 66, 90, 91) des ersten und des zweiten Metallblechs (60, 68) zum Äußeren des Gefäßes in Richtung der Haltestruktur hervorstehen, wobei die Innenseite der ersten und der zweiten isolierenden Platte (44, 50) senkrechte Vertiefungen (14, 15, 55, 54) aufweisen, welche jeweils die Wellen (65, 66, 90, 91) des ersten und des zweiten Metallblechs (60,86) aufnehmen.

12. Gefäß gemäß Anspruch 11, wobei die erste isolierende Platte (44) in jedem Bereich zwischen zwei, die zweite Wand schneidenden, Vertiefungen (55) eine metallische Platte (56) umfasst, auf welcher die erste Kante (61) des ersten Metallblechs (60) und der erste Flügel des oder eines der metallischen Winkelstücke (67) verschweißt sind.

13. Gefäß gemäß einem der Ansprüche 1 bis 10, wobei die Wellen (103) des ersten und des zweiten Metallblech (60,86) in das Innere des Gefäßes hervorstehen, wobei die primäre wärmeisolierende Sperre (5) isolierende Platten (4, 94) aufweist, welche jeweils eine Außenseite aufweisen, welche senkrechte Vertiefungen aufweisen, welche die Wellen (103) des ersten und des zweiten Metallblechs (60, 86) der sekundären Abdichtungsmembran (4) aufnehmen.

14. Gefäß gemäß einem der Ansprüche 1 bis 13, wobei die sekundäre wärmeisolierende Sperre der ersten Wand (42) in einem planen Bereich, welcher sich von einer Kante der zweiten isolierenden Platte (50), welche der zweiten Wand (43) gegenüberliegt, hin zu einer dritten Wand, welche der zweiten Wand (42) gegenüberliegt, erstreckt, weiterhin umfasst eine Vielzahl von nebeneinanderliegenden standardisierten isolierenden quaderförmigen Platten (2) und eine Innenseite (10), welche der Haltestruktur (3) gegenüberliegt, und welche mit einer metallischen Platte (17, 18) ausgestattet ist und wobei die sekundäre Abdichtungsmembran (4) der ersten Wand (42) in einem planen Bereich, welcher sich von der zweiten Kante (88) des zweiten Metallblechs (86) hin zu einer dritten Wand erstreckt, weiterhin umfasst eine Vielzahl von standardisierten Metallblechen (24), welche jeweils mindestens zwei senkrechte Wellen (25, 26) aufweisen, und welche miteinander verschweißt sind und jeweils rittlings auf mehreren der standardisierten isolierenden Platten (2) angeordnet sind und auf die metallischen Platten (17, 18) der standardisierten isolierenden Platten (2) geschweißt sind, wobei eines der standardisierten Metallbleche (24), welches das zweite Metallblech (86) einfasst, eine zur zweiten Wand (43) gerichtete Kante aufweist, welche zum einen auf die metallische Platte (92) der zweiten isolierenden Platte (50) und zum anderen auf die zweite Kante (88) der zweiten metallischen Platte (86) geschweißt ist.

15. Gefäß gemäß Anspruch 14, wobei die standardisierten isolierenden Platten (2) identische Maße aufweisen und wobei die zweite isolierende Platte (50) in einer Richtung, welche sich von einer Kante, welche gegenüber der zweiten Wand (43) geführt ist, hin zu einer Kante, welche der zweiten Wand gegenüberliegt, erstreckt, ein Maß aufweist, welches unterschiedlich zum entsprechenden Maß der standardisierten isolierenden Platten ist.

16. Gefäß gemäß einem der Ansprüche 1 bis 15, wobei die primäre wärmeisolierende Sperre (5) der ersten Wand (42) einen ersten Isolierblock (94) umfasst, welcher auf der ersten isolierenden Platte (44) der sekundären wärmeisolierende Sperre (1) mittels eines Befestigungsmittels (84) angebracht ist und wobei das erste Metallblech (60) eine Öffnung (83) durch welche das Befestigungsmittel (84,98) führbar ist, aufweist und im Randbereich der Öffnung (83) des Befestigungsmittels (84, 98) verschweißt ist.

17. Gefäß gemäß Anspruch 16, wobei der erste Isolierblock (94) auf der ersten isolierenden Platte (44) mittels eines Gewindebolzen (98), welcher durch die in dem ersten Isolierblock, 94) angeordneten Öffnungen führbar ist, angebracht ist, wobei der Gewindebolzen (98) mit einer in einer Hülsenmutter (84) angeordneten Gewindebohrung zusammenwirkt, wobei die Hülsenmutter (84) die Öffnung (83), welche in dem ersten Metallblech (60) angeordnet ist, durchquert und ein Gewinde aufweist, welches mit einer Gewindebohrung, welche in einer Verankerungsplatte (58), welche auf der ersten isolierenden Platte (44) angebracht ist, angeordnet ist, zusammenwirkt, wobei die Hülsenmutter (84) weiterhin einen Flansch (85) umfasst, welcher das erste Metallblech (60) gegen die erste isolierende Platte (44) drückt und welcher auf das erste Metallblech (60) im Randbereich der Öffnung (83) geschweißt ist.

18. Gefäß gemäß einem der Ansprüche 1 bis 17, wobei die erste isolierende Platte (44) zusammen mit einer ersten isolierenden Platte (44) der zweiten Wand (43) eine vormontierte Winkelstruktur bildet, welche eine Ecke des Gefäßes an der Schnittstelle zwischen der ersten und der zweiten Wand (42,43) bildet.

19. Schiff (70) zum Transport einer Flüssigkeit, wobei das Schiff eine Doppelhülle (72) und ein in der Doppelhülle angeordnetes Gefäß (71) gemäß einem der Ansprüche 1 bis 18 umfasst.

20. Verfahren zur Be- und Entladung eines Schiffes (70) gemäß Anspruch 19, wobei eine Flüssigkeit von oder zu einer schwimmenden oder erdverbundenen Speicheranlage (77) zu oder von dem Gefäß des Schiffes (71) durch isolierte Rohrleitungen (73, 79, 76, 81) geleitet wird.

21. Transfersystem für eine Flüssigkeit, wobei das System ein Schiff (70) gemäß Anspruch 19, isolierte Rohrleitungen (73,79, 76,81), welche so angeordnet sind, dass sie das in der Schiffshülle angeordnete Gefäß (71) mit einer schwimmenden oder erdverbundenen Speicheranlage (77) verbinden, und eine Pumpe umfasst, um eine Flüssigkeit durch isolierte Rohrleitungen von oder zu der schwimmenden oder erdverbundenen Speicheranlage oder zu oder von dem Gefäß des Schiffs zuleiten.

## Claims

1. A sealed and thermally insulated tank intended for the storage of a fluid, said tank having a plurality of walls (42, 43) exhibiting a multilayer structure successively having, in the direction of the thickness from the outside to the inside of the tank, a secondary thermally insulating barrier (1) retained against a load-bearing structure (3), a secondary sealing membrane (4) borne by the secondary thermally insulating barrier (1), a primary thermally insulating barrier (5) bearing against the secondary sealing membrane (4) and a primary sealing membrane (7) borne by the primary thermally insulating barrier (5) and designed to be in contact with the fluid contained in the tank;
a first of the walls (42, 43) having a secondary thermally insulating barrier (1) comprising:
- a first insulating panel (44) arranged along the intersection (45) between the load-bearing structure (3) of said first wall (42) and the load-bearing structure (3) of an adjacent second wall (43); and
- a second insulating panel (50) juxtaposed with the first insulating panel (44) along one edge (48) of said first insulating panel (44) opposing the second wall (43);
the first and the second insulating panels (44, 50) each having an internal face (3) opposing the load-bearing structure provided with a small metal plate (56, 82, 92, 93);
the first wall (42) having a secondary sealing membrane (4) comprising:
- a first metal sheet (60) having at least two perpendicular corrugations (65, 66) and having a first and a second edge (61, 62) which are opposed to one another and which are parallel to the intersection (45) between the load-bearing structure (3) of said first wall (42) and the load-bearing structure (3) of an adjacent second wall (43), the first edge (61) being closer to the second wall (43) than the second edge (62) ; the first edge (61) of the first metal sheet (60) being, on the one hand, welded to the small metal plate (56) of the first insulating panel (44) to retain the first metal sheet (60) against the first insulating panel (44) and, on the other hand, welded to a first flange of a metal angle plate (67) which has a second flange welded to the metal sheet (60) of the secondary sealing membrane (4) of the second wall (43); and
- a second metal sheet (86) having at least two perpendicular corrugations (90, 91), one of said corrugations (91) being arranged in the extension of one of the corrugations (66) of the first metal sheet (60), the second metal sheet (86) having a first and a second edge (87, 88) which are opposed to one another and parallel to the intersection (45) between the load-bearing structure (3) of said first wall (42) and the load-bearing structure (3) of an adjacent second wall (43), the first edge (87) being closer to the second wall (43) than the second edge (88),
the second edge (62) of the first metal sheet (60) and the first edge (87) of the second metal sheet (86) being welded together and in that one edge from the second edge (62) of the first metal sheet (60) and the first edge (87) of the second metal sheet (86) is a joggled edge permitting the first and the second metal sheets (60, 86) to be lap welded to one another
the tank being **characterized in that** the second edge (88) of the second metal sheet (86) is welded to the small metal plate (92) of the second insulating panel (50).

2. The tank as claimed in claim 1, wherein the joggled edge has a width greater than 4 centimeters.

3. The tank as claimed in claim 1 or 2, wherein the secondary sealing membrane (4) of the first wall also has, in a planar area extending from the second edge (88) of the second metal sheet (86) toward a third wall opposing the second wall (42), a plurality of standard metal sheets (24) which each have at least two perpendicular corrugations (25, 26), one thereof being parallel to the intersection, the corrugations (25, 26) parallel to the intersection of the plurality of standard metal sheets (24) being separated from one another by a standard inter-corrugation distance and wherein a corrugation (65) of the first metal sheet (60) which is parallel to the intersection is separated from a corrugation (90) of the second metal sheet (86) which is parallel to the intersection by an inter-corrugation distance which is different from the standard inter-corrugation distance.

4. The tank as claimed in any one of claims 1 to 3, wherein the second edge (62) of the first metal sheet (60) and the first edge (87) of the second metal sheet (86) are welded to one another perpendicular to an interstice separating the first and second insulating panels (44, 50).

5. The tank as claimed in claim 4, wherein the first insulating panel (44) is combined with the second insulating panel (50) by means of a plurality of coupling elements (22), each coupling element (22) being, on the one hand, fixed to an edge of the internal face of the first insulating panel (44) and, on the other hand, fixed to an opposing edge of the internal face of the second insulating panel (50) so as to oppose a mutual separation of the first and second insulating panels (44, 50).

6. The tank as claimed in claim 5, wherein the coupling elements (22) are coupling plates which each have an external face bearing against the internal face of the first and the second insulating panels (44, 50) and an external face, at least one of the coupling plates having an internal face provided with a small metal plate, the second edge (62) of the first metal sheet (60) and the first edge (87) of the second metal sheet (86) being welded to said small metal plate.

7. The tank as claimed in any one of claims 1 to 6, wherein the first metal sheet (60) has a plurality of corrugations (66) extending in a direction which is secant to the second wall (43) and a single corrugation (65) extending along an axis parallel to the intersection between the first and second walls (42, 43).

8. The tank as claimed in any one of claims 1 to 7, wherein the second metal sheet (86) has a plurality of corrugations (91) extending in a direction which is secant to the second wall and a single corrugation or two corrugations (90) each extending along an axis parallel to the intersection (45) between the first and second walls (42, 43).

9. The tank as claimed in any one of claims 1 to 8, wherein the metal angle plate (67) has a corrugation (68) extending from one end to the other end of said metal angle plate (67), along the first and the second flanges, so as to permit a deformation of the metal angle plate (67) in a direction parallel to the intersection (45) between the first and second walls (42, 43), said corrugation (68) extending in the extension of one of the corrugations (66) of the first metal sheet (60) which extends in a direction which is secant to the second wall (43).

10. The tank as claimed in any one of claims 1 to 9, wherein the or each metal angle plate (67) is also welded to the metal sheet (56) of the first insulating panel (44).

11. The tank as claimed in any one of claims 1 to 10, wherein the corrugations (65, 66, 90, 91) of the first and the second metal sheets (60, 86) protrude to the outside of the tank in the direction of the load-bearing structure, the internal face of the first and second insulating panels (44, 50) having perpendicular grooves (14, 15, 55, 54) respectively receiving the corrugations (65, 66, 90, 91) of the first and second metal sheets (60, 86).

12. The tank as claimed in claim 11, wherein the first insulating panel (44) has, in each interval between two grooves (55) which are secant to the second wall (43), a small metal plate (56), the first edge (61) of the first metal sheet (60) and the first flange of the metal angle plate or one of the metal angle plates (67) being welded thereto.

13. The tank as claimed in any one of claims 1 to 10, wherein the corrugations (103) of the first and the second metal sheets (60, 86) protrude toward the inside of the tank, the primary thermally insulating barrier (5) comprising insulating panels (4, 94), each having an external face having perpendicular grooves receiving the corrugations (103) of the first and the second metal sheets (60, 86) of the secondary sealing membrane (4).

14. The tank as claimed in any one of claims 1 to 13, wherein the secondary thermally insulating barrier (1) of the first wall (42) also has in a planar area, extending from one edge of the second insulating panel (50) opposing the second wall (43) toward a third wall opposing the second wall (42), a plurality of juxtaposed standard insulating panels (2), each having a rectangular parallelepipedal shape and an internal face (10) opposing the load-bearing wall (3) which is provided with a small metal plate (17, 18) and wherein the secondary sealing membrane (4) of the first wall (42) also has, in a planar area extending from the second edge (88) of the second metal sheet (86) toward the third wall, a plurality of standard metal sheets (24) which each have at least two perpendicular corrugations (25, 26) and which are welded to one another and are each arranged across a plurality of said standard insulating panels (2) and welded to the small metal plates (17, 18) of said standard insulating panels (2), one of said standard metal sheets (24) bordering the second metal sheet (86) having an edge oriented toward the second wall (43) which is, on the one hand, welded to the small metal plate (92) of the second insulating panel (50) and, on the other hand, welded to the second edge (88) of the second metal sheet (86).

15. The tank as claimed in claim 14, wherein the standard insulating panels (2) have identical dimensions and wherein the second insulating panel (50) has a dimension in a direction extending from an edge oriented facing the second wall toward an edge opposing the second wall (43) which is different from the corresponding dimension of the standard insulating panels (2).

16. The tank as claimed in any one of claims 1 to 15, wherein the primary thermally insulating barrier (5) of the first panel (42) has a first insulating block (94) which is fixed to the first insulating panel (44) of the secondary thermally insulating barrier (1) by means of a fixing member (84) and wherein the first metal sheet (60) has an orifice (83) for the passage of the fixing member (84, 98) and is welded on the periphery of said orifice (83) to the fixing member (84, 98).

17. The tank as claimed in claim 16, wherein the first insulating block (94) is fixed to the first insulating panel (44) by means of a threaded pin (98) passing through an orifice formed in said first insulating block (94), said threaded pin (98) cooperating with a threaded bore formed in a cap nut (84), said cap nut (84) traversing the orifice (83) formed in the first metal sheet (60) and having a threaded portion cooperating with a threaded bore formed in a small anchoring plate (58) fixed to the first insulating panel (44), the cap nut (84) also having a flange (85) which presses the first metal sheet (60) against the first insulating panel (44) and which is welded to the first small metal plate (60) on the periphery of said orifice (83).

18. The tank as claimed in any one of claims 1 to 17, wherein the first insulating panel (44) forms with a first insulating panel (44) of the second wall (43) a preassembled angled structure forming a corner of the tank at the intersection between the first and second walls (42, 43).

19. A marine vessel (70) for the transport of a fluid, the marine vessel having a double hull (72) and a tank (71) as claimed in any one of claims 1 to 18 arranged in the double hull.

20. A method for the supply or discharge to or from a marine vessel (70) as claimed in claim 19, wherein a fluid is conducted via insulated pipelines (73, 79, 76, 81) from or to a floating or land-based storage installation (77) to or from the tank (71) of the marine vessel.

21. A system for transferring a fluid, the system having a marine vessel as claimed in claim 19, insulated pipelines (73, 79, 76, 81) being arranged so as to connect the tank (71) installed in the hull of the marine vessel to a floating or land-based storage installation (77) and a pump for conducting a fluid through the insulated pipelines from or to the floating or land-based storage installation to or from the tank of the marine vessel.
